(19) Europäisches Patentamt
European Patent Office
Office européen des brevets

(11) EP 1 001 320 B1

(12) EUROPÄISCHE PATENTSCHRIFT

(45) Veröffentlichungstag und Bekanntmachung des Hinweises auf die Patenterteilung:
**18.06.2003 Patentblatt 2003/25**

(51) Int Cl.$^7$: **G05B 13/04**, G05B 23/02, G05B 17/02, B29C 47/92

(21) Anmeldenummer: **99121797.7**

(22) Anmeldetag: **03.11.1999**

(54) **Verfahren zur Identifikation eines verzögerungsbehafteten Prozesses mit Ausgleich sowie Einrichtung zur Regelung eines derartigen Prozesses**

Method for the identification of a process with a delay using compensation and device for controlling such a process

Procédé pour l' identification d' un processus avec retard utilisant une compensation et dispositif pour la commande d' un tel processus

(84) Benannte Vertragsstaaten:
**AT CH DE ES FR GB LI**

(30) Priorität: **10.11.1998 DE 19851826**

(43) Veröffentlichungstag der Anmeldung:
**17.05.2000 Patentblatt 2000/20**

(73) Patentinhaber: **SIEMENS AKTIENGESELLSCHAFT**
**80333 München (DE)**

(72) Erfinder: **Pfeiffer, Bernd-Markus**
**76199 Karlsruhe (DE)**

(56) Entgegenhaltungen:
**EP-A- 0 429 959**
**EP-A- 0 542 177**
**DE-A- 4 026 995**
**DE-A- 19 548 909**
**DE-A- 19 722 431**

EP 1 001 320 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Identifikation eines verzögerungsbehafteten Prozesses mit Ausgleich nach dem Oberbegriff des Anspruchs 1 sowie eine Einrichtung zur Regelung eines derartigen Prozesses nach dem Oberbegriff des Anspruchs 3.

Aus der Druckschrift EP 0 542 177 ist ein Verfahren zur Regelung der Dicke eines durch Ausstoßung gebildeten Filmes bekannt, wobei die Regelstrecke verzögerungsbehaftet ist und eine Vielzahl von Stellgliedern zum Heizen des Prozesses aufweist.

In der nachveröffentlichten Patentschrift DE 19 722 431 wird ein adaptiver Regler für verzögerungsbehaftete Prozesse mit Ausgleich, bei welchen die Sprungantwort in einen neuen Beharrungszustand einläuft, vorgeschlagen. Zur Anpassung der Reglerparameter an den jeweiligen Prozeß wird eine Identifikation des Prozesses durchgeführt, bei welcher ein Modell des Prozesses bestimmt wird, welches das Verhalten des Prozesses zumindest näherungsweise beschreibt. Für Temperaturregelungen wird ein VZ2-Modell vorgeschlagen. Damit auf einen aufwendigen Sprungversuch zur Bestimmung der optimalen Modellparameter verzichtet werden kann, wird nach einem Sollwertsprung die Stellgröße zunächst in einem gesteuerten Betrieb auf einen ersten konstanten Wert gesetzt. Anhand der Sprungantwort wird ein IT1-Modell identifiziert und ein Regler parametriert, der den Prozeß in einen zweiten stationären Zustand regelt. Aus einer anhand der Sprungantwort berechneten Wendetangente und den Werten der Regelgröße sowie der Stellgröße in den beiden stationären Zuständen werden daraufhin Parameter des VZ2-Modells berechnet. Der Prozeß ist damit identifiziert und es kann ein geeigneter Regler entworfen werden. Das vorgeschlagene Identifikationsverfahren ist für Prozesse mit nur einem Stellglied ausgelegt. Bei Prozessen mit mehreren Stellgliedern, beispielsweise einer Temperaturregelung mit einer Heizung und einer Kühlung, kann es nicht ohne weiteres angewendet werden.

Anhand Figur 12 soll im folgenden die Funktionsweise der in der deutschen Patentanmeldung mit dem Aktenzeichen 19722431.8 vorgeschlagenen Regeleinrichtung bei einer Prozeßidentifikation erläutert werden. In Phase 1, die bis zum Zeitpunkt $t_0$ reicht, wird eine Stellgröße y = 0 an einen Prozeß angelegt. In einer Temperaturregelung entspricht diese Phase der Situation, daß bei abgeschalteter Heizung die konstante Stellgröße y = 0 an den Prozeß ausgegeben wird. Die Regelgröße x befindet sich in einem ersten stationären Zustand $x = x_0 = c_g$. Der Wert $c_g$ wird als Gleichwert erfaßt und abgespeichert.

Sobald ein Bediener einen hinreichend großen Sollwertsprung vorgibt, wird in Phase 2 eingetreten und die maximale Stellgröße $y = y_2 = y_{max}$ durch eine Steuereinheit in einem gesteuerten Betrieb an den Prozeß angelegt. In einer Temperaturregelung entspricht dies der vollen Heizleistung. Diese Stellgröße wird so lange beibehalten, bis ein Wendepunkt WP im Verlauf der Regelgröße x festgestellt werden kann. Ein Wendepunkt gilt als erkannt, wenn in zwei aufeinanderfolgenden Abtastschritten die Steigung der Sprungantwort SA zum erstenmal rückläufig ist. Damit die Steigungsinformation nicht durch Meßrauschen verfälscht wird, werden die Meßwerte der Regelgröße x einer Tiefpaßfilterung unterzogen. Wenn die Regelabweichung xd sich um einen vorgegebenen Wert zwischen 50 und 80 % der Sprunghöhe, der vorzugsweise 60 % beträgt, verringert hat, wird auch ohne rückläufige Steigung der Sprungantwort ein Wendepunkt WP angenommen. Anhand einer Tangente WT im Wendepunkt WP, die auch als Wendetangente bezeichnet wird, kann eine Verzugszeit $t_u$, die sich aus dem Schnittpunkt der Wendetangente WT mit der Gerade $x = x_0$ ergibt, berechnet werden zu:

$$t_u = t_w - t_0 - t_{h1}, \qquad t_{h1} = \frac{x_w - x_0}{dx_w / dt}$$

mit

$t_w$ - Zeitpunkt des Wendepunkts WP,

$t_0$ - Zeitpunkt des Sollwertsprungs,

$t_{h1}$ - eine Hilfsgröße,

$x_w$ - Wert der Regelgröße x im Wendepunkt WP,

$x_o$ - Wert der Regelgröße x im ersten stationären Zustand und

$\frac{dx_w}{dt}$ - Steigung der Wendetangente WT.

Mit diesen Informationen wird ein IT1-Prozeßmodell identifiziert mit der Übertragungsfunktion

$$G(s) = \frac{K_i}{s(T_1 s + 1)},$$

deren Verstärkung

$$K_i = \frac{dx_w / dt}{y_2}$$

und Zeitkonstante

$$T_1 = 2t_u$$

gesetzt werden.
In Phase 3, die durch das Auftreten des Wendepunktes WP eingeleitet wird, wird nun eine PI-Struktur des linearen Reglers R eingestellt, und die Parameter des PI-Reglers werden anhand des IT1-Modells ermittelt. Der Verstärkungsfaktor $K_{p1}$ des PI-Reglers wird so eingestellt, wie ein P-Regler für die Regelung einer IT1-Strecke im asymptotischen Grenzfall entworfen werden müßte:

$$K_{p1} = \frac{1}{4 T_1 K_i} .$$

In einer zunächst vorsichtigen Einstellung, bei der Überschwinger weitgehend vermieden werden und ein ausreichend schnelles Regelverhalten erreicht wird, beträgt die Nachstellzeit $T_{n1}$ des PI-Reglers das Zwei- bis Zehnfache, vorzugsweise das Sechsfache, der Zeitkonstanten $T_1$.
Die Umschaltung von gesteuertem auf geregelten Betrieb erfolgt stoßfrei, indem der I-Anteil eines PI- oder PID-Reglers bei der Umschaltung entsprechend initialisiert wird.
Da das IT1-Modell nach einem Sollwertsprung nicht in einen neuen Beharrungszustand einläuft, d. h. einen Prozeß ohne Ausgleich modelliert, kann die Prozeßverstärkung zunächst nicht direkt identifiziert werden. Damit aber große Verstärkungsfaktoren des mit dem PI-Regler geregelten Prozesses mit Ausgleich nicht zu Problemen führen, wird der PI-Regler wegen der noch unvollständigen Informationen über den Prozeß P nur sehr vorsichtig ausgelegt. Sobald mit dieser groben Regelung jedoch ein stationärer Zustand erreicht wird, kann die Verstärkung $K_{p2}$ eines Prozeßmodells mit Ausgleich bestimmt werden zu:

$$K_{p2} = \frac{x_1 - x_0}{y_1 - y_0}$$

mit

- $x_1$ - Wert der Regelgröße x im zweiten stationären Zustand,
- $x_0$ - Wert der Regelgröße x im ersten stationären Zustand,
- $y_1$ - Wert der Stellgröße y im zweiten stationären Zustand und
- $y_0$ - Wert der Stellgröße y im ersten stationären Zustand.

Als Kriterium für das Erreichen des zweiten stationären Zustands kann beispielsweise überprüft werden, ob die Regelabweichung unterhalb eines vorgegebenen Grenzwertes liegt und/oder die Steigung der Regelgröße kleiner als ein Bruchteil der Steigung der Wendetangente WT ist.
Mit der Kenntnis der Prozeßverstärkung $K_{p2}$ können nun auch die Informationen aus der Wendetangente WT zur Ermittlung eines exakteren Modells, beispielsweise eines PT2- oder eines PT1Tt-Modells, weitergehend ausgewertet werden. Die Übertragungsfunktion eines PT2-Modells lautet im Laplace-Bereich:

$$G(s) = \frac{K_{p2}}{(T_2 s + 1) \cdot (T_3 s + 1)},$$

die Übertragungsfunktion eines PT1Tt-Modells:

$$G(s) = \frac{K_{p2}}{(T_4 s + 1)} e^{-T_t s} .$$

Die Ausgleichszeit $t_a$ der Sprungantwort, die sich aus den Schnittpunkten der Wendetangente WT mit der Gerade bei $x = x_0$, die den ersten stationären Zustand markiert, und der Gerade bei $x = c_g + K_{p2} \cdot y_2$, die einen stationären Zustand markiert, der von der Regelgröße x angefahren werden würde, wenn an den Prozeß P die im gesteuerten Betrieb während der Phase 2 angelegte Stellgröße $y_2$ auch im geregelten Betrieb beibehalten werden würde, ergibt, wird berechnet zu:

$$t_a = t_{h1} + t_{h2}, \qquad t_{h2} = \frac{K_{p2} \cdot y_2 + c_g - x_w}{dx_w / dt}$$

mit

$t_{h2}$ - eine zweite Hilfsgröße,
$y_2$ - Wert der während Phase 2 im gesteuerten Betrieb angelegten Stellgröße y und
$c_g$ - Gleichwert, der sich als stationärer Zustand einstellt, wenn die Stellgröße y = 0 an den Prozeß P angelegt wird.

Falls die Ausgleichszeit $t_a$ größer oder gleich dem Zehnfachen der Verzugszeit $t_u$ ist, wird vorzugsweise ein PT2-Modell zur Prozeßidentifikation verwendet. Zur Berechnung der Zeitkonstanten $T_2$ und $T_3$ des PT2-Modells wird ein aus dem Buch "Regelungstechnik I" von Heinz Unbehauen, 7. Auflage, Vieweg Verlag, Braunschweig/Wiesbaden, 1992, Seiten 363 bis 367, bekanntes Verfahren herangezogen und weiterentwickelt. Betrachtet wird die Sprungantwort des PT2-Modells mit dem Verhältnis

$$f = \frac{T_3}{T_2}$$

der beiden Zeitkonstanten $T_2$ und $T_3$. Die Sprungantwort erreicht ihren Wendepunkt WP zum Zeitpunkt

$$t_w = f \frac{\ln f}{f - 1} T_2.$$

Aus dem Verlauf der Sprungantwort werden die Ausgleichszeit $t_a$ zu

$$t_a = T_2 \left( \frac{T_3}{T_2} \right)^{\frac{T_3}{T_3 - T_2}}$$

und die Verzugszeit $t_u$ zu

$$t_u = \frac{T_3 T_2}{T_3 - T_2} \ln\left(\frac{T_3}{T_2}\right) - t_a + T_3 + T_2$$

bestimmt. Daraus erhält man nach Einsetzen von f:

$$T_2 = t_a f^{\frac{-f}{f-1}}, \qquad \frac{t_a}{t_u} = \frac{1}{f^{\frac{-f}{f-1}}\left(1 + f + \frac{f \ln f}{f-1}\right) - 1}.$$

Damit dieses nichtlineare Gleichungssystem analytisch nach $T_2$ und f aufgelöst werden kann, müssen die Exponentialfunktionen durch lineare Näherungen, die zumindest für den praktisch relevanten Bereich $2 < f < 20$ gute Ergebnisse liefern, approximiert werden. Eine geeignete Approximation liefern die beiden folgenden Gleichungen mit Konstanten $p_1$ bis $p_4$:

$$\frac{t_a}{t_u} \approx p_1 f + p_2,\ p_1 = 1{,}1919,\ p_2 = 8{,}0633$$

$$T_2 \approx t_a \frac{1}{p_3 f + p_4}, \qquad p_3 = 1{,}0722, \qquad p_4 = 2{,}0982.$$

Mit diesen Gleichungen werden die Zeitkonstanten $T_2$ und $T_3$ des PT2-Modells berechnet zu:

$$T_2 = t_a \cdot \frac{1}{\frac{p_3}{p_1}\left(\frac{t_a}{t_u} - p_2\right) + p_4}$$

$$T_3 = \frac{T_2}{p_1}\left(\frac{t_a}{t_u} - p_2\right).$$

Mit diesem PT2-Modell wird ein PI- oder PID-Regler entworfen.

In der Kunststoffverarbeitung, insbesondere der Fertigung von Kunststoffprofilen, werden sogenannte Kunststoff-Extruder eingesetzt. Mit einem Kunststoff-Extruder können beispielsweise PVC-Profile für Fensterrahmen hergestellt werden. Bezüglich der Temperaturregelung sind derartige Kunststoff-Extruder in mehrere Zonen unterteilt. In den Extruder wird Kunststoffgranulat bei einer ersten Zone zugeführt und über Extruder-Schnecken durch weitere Heiz- und Kühlzonen gefördert. In einer Düse erhält der Kunststoff seine produktspezifische Form, indem er mit hohem Druck durch die Düse entsprechender Kontur hindurchgepreßt wird. Einzelne Zonen des Extruders, beispielsweise die erste Zone, können nur beheizt werden, während andere Zonen sowohl mit einer Heizung als auch mit einer Kühlung versehen sind. Temperaturen werden in den Zonen über Thermoelemente gemessen. Als Stellglieder für eine Heizung dienen pulsförmig angesteuerte elektrische Widerstände auf Heizspulen oder Heizplatten, als Kühlung kann beispielsweise ein verstellbares Gebläse verwendet werden. Je nach Betriebszustand müssen Temperaturzonen entweder geheizt oder gekühlt werden, da zu Beginn der Kunststoff geschmolzen werden muß, später aber durch den Betrieb der Anlage mit der Extrusionsschnecke hohe Reibungsenergien freigesetzt werden. Die Auswirkungen der Reibungswärme auf die Temperatur können durch eine Störung am Prozeßeingang modelliert werden. Ein PI- oder PID-Regler, der zur Regelung der Temperatur einer Zone vorgesehen werden kann, sollte auf ein gutes Störverhalten bei konstantem Sollwert eingestellt werden, damit Störungen, die auf den Prozeß einwirken, möglichst schnell ausgeregelt werden. Wegen dieser "scharfen" Einstellung treten aber bei Änderungen des Sollwerts Überschwinger auf, die bei Temperaturregelungen in vielen Fällen nicht tolerierbar sind. Beim Entwurf des PI- oder PID-Reglers besteht somit ein Zielkonflikt zwischen einem Entwurf auf gutes Störverhalten oder einem Entwurf auf gutes Führungsverhalten des Regelkreises. Es hat sich herausgestellt, daß ein gutes Führungsverhalten bei Temperaturregelstrecken mit PI- oder PID-Reglern kaum gemeinsam mit einem guten Störverhalten zu erreichen ist.

Als Ausweg aus diesem Zielkonflikt wird in der oben genannten deutschen Patentanmeldung mit dem amtlichen Aktenzeichen 19722431.8 eine Strukturumschaltung vorgeschlagen. Bei großen, positiven Sprüngen der Führungsgröße, z. B. beim Hochheizen eines kalten Extruders auf den Arbeitspunkt, wird der I-Anteil des Reglers abgeschaltet. D. h., statt eines PIoder PID-Reglers wird in diesen Situationen ein P- bzw. ein PD-Regler benützt. In Sollwertnähe wird der I-Anteil wieder stoßfrei dem Regler zugeschaltet. Eine derartige Strukturumschaltung ist in der Praxis jedoch kompliziert und mit hohem Aufwand zu realisieren, da für verschiedene Betriebsfälle verschiedene Reglerstrukturen einzustellen sind. Sie erfordert zudem viel Speicherplatz für die verschiedenen Reglerstrukturen sowie für die Umschaltmechanismen, die in Software realisiert werden müssen. In Zonen, die sowohl mit einer Heizung als auch mit einer Kühlung versehen sind, wäre eine Strukturumschaltung nicht nur für positive, sondern auch für negative Sollwertsprünge erforderlich. Bei einem Regler, der lediglich eine Heizung ansteuern muß, kann auf eine Strukturumschaltung bei negativen Sollwertsprüngen verzichtet werden, weil die Stellgröße nach unten durch Abschalten der Heizung begrenzt ist und weil das Regelkreisverhalten bei größeren negativen Sollwertsprüngen von der Stellgliedbeschränkung dominiert wird. Maßnahmen zur Begrenzung eines Weglaufens des I-Anteils bei Erreichen der Beschränkung des Stellglieds können somit bereits ein Überschwingen der Regelgröße vermindern. Das Modell eines Prozesses, der mit einer Heizung und einer Kühlung ausgestattet ist, besitzt jedoch verschiedene Verstärkungen für Heizen und Kühlen, so daß die bei einer Strukturumschaltung durchzuführenden Fallunterscheidungen erheblich problematischer werden. Zudem ist die Strukturumschaltung nur bei Sollwertsprüngen wirksam, nicht jedoch bei plötzlich auftretenden großen Störeinwirkungen.

Der Erfindung liegt die Aufgabe zugrunde, ein Verfahren zur Identifikation eines verzögerungsbehafteten Prozesses mit Ausgleich sowie eine Einrichtung zur Regelung eines derartigen Prozesses zu schaffen, welche die Identifikation eines Prozesses mit mehreren Stellgliedern ermöglichen.

Diese Aufgabe wird durch das neue Verfahren zur Identifikation eines verzögerungsbehafteten Prozesses mit Ausgleich sowie durch die neue Einrichtung zur Regelung eines derartigen Prozesses gemäß den Merkmalen des Anspruchs 1 bzw. gemäß den Merkmalen des Anspruchs 3 gelöst. In den abhängigen Ansprüchen sind vorteilhafte Weiterbildungen des Verfahrens bzw. der Einrichtung beschrieben.

Die Erfindung hat den Vorteil, daß auf einen zeitaufwendigen Sprungversuch bei der Inbetriebnahme eines Reglers verzichtet werden kann. Mit wenig Aufwand wird das dynamische Verhalten des Prozesses sowie die jeweilige Prozeßverstärkung für die einzelnen Stellglieder ermittelt. Die neue Regeleinrichtung paßt sich ohne manuelle Parametrierung und ohne Vorkenntnisse über den Prozeß automatisch an beliebige verzögerungsbehaftete Prozesse mit Ausgleich an. Die Optimierung der Regeleinrichtung kann bei der ersten Inbetriebnahme nach dem Einsetzen in den Regelkreis erfolgen, ohne daß hierzu Eingaben des Bedienpersonals erforderlich wären.

Die Erfindung hat weiterhin den Vorteil, daß zur Realisierung auf Komponenten eines Standardreglers zurückgegriffen werden kann. Eine komplizierte Fallunterscheidung, wie sie bei der bekannten Strukturumschaltung erforderlich war, entfällt. Die neue Regeleinrichtung kann als Kaskadenregelung interpretiert werden. In einem unterlagerten Regelkreis wird eine träge Temperaturstrecke mit einem P-Regler oder vorteilhaft einem PD-Regler schneller gemacht. Dieser unterlagerte Regelkreis wird durch einen überlagerten I-Regler stationär genau auf den Sollwert geregelt. Diese Strukturzerlegung zeigt in der Praxis nach einem Sollwertsprung einen stoßfreien Anstieg der Stellgröße mit einer gegenüber der bekannten Strukturumschaltung etwas längeren Anstiegszeit, erreicht aber schließlich schneller den eingeschwungenen Zustand am Sollwert.

Im allgemeinen kann das Verhalten von Temperaturregelstrecken zumindest näherungsweise durch ein VZ2-Modell beschrieben werden. Wird für den unterlagerten Regelkreis ein PD-Regler verwendet, so können in vorteilhafter Weise die mathematischen Methoden der Optimierung im Zustandsraum zum Reglerentwurf eingesetzt werden, die als mathematisch exakte Methode ein gutes Regelverhalten liefern. Die Ergebnisse dieser Optimierung für verschiedene VZ2-Prozesse können durch ein Polynom angenähert werden, so daß einfache Einstellregeln für den Online-Einsatz abzuleiten sind. Somit kann der Reglerentwurf nach der Streckenidentifikation mit einer einfachen Recheneinheit durchgeführt werden. Mit geringem Aufwand ist eine Regeleinrichtung implementierbar, die sich automatisch bei der ersten Inbetriebnahme und während des späteren Betriebs an eine bestehende Temperaturregelstrecke adaptiert.

Anhand der Zeichnungen, in denen ein Ausführungsbeispiel der Erfindung dargestellt ist, werden im folgenden die Erfindung sowie Ausgestaltungen und Vorteile näher erläutert.

Es zeigen:

| | |
|---|---|
| Figur 1 | ein Regelkreismodell, das zur Erläuterung einem Entwurf eines I-Reglers und eines unterlagerten PD-Reglers zugrundegelegt wird, |
| Figur 2 | eine Struktur eines Simulationsmodells der Strecke mit einer vorgeschalteten Split-Range-Einheit, |
| Figur 3 | ein Schaltbild eines Regelkreises mit einer Regeleinrichtung für Split-Range-Betrieb, |
| Figur 4 | einen Verlauf der Führungsgröße w(t) und der Regelgröße x(t) in dem Schaltbild nach Figur 3 bei Selbsteinstellung des Reglers mit einem Heiz- und Kühlversuch sowie anschließender Störungskompensation, |
| Figur 5 | den zugehörigen Verlauf der Stellgröße y(t), |

| | |
|---|---|
| Figuren 6, 7 und 8 | Sprungantworten eines Prozesses, eines unterlagerten PD-Regelkreises und eines geschlossenen Regelkreises mit einer vollständigen Regeleinrichtung, |
| Figur 9 | eine Antwort auf eine sprungförmige Störung am Prozeßeingang, |
| Figur 10 | eine Antwort auf eine sprungförmige Störung am Prozeßausgang und |
| Figur 11 | zum Vergleich eine fiktive Sprungantwort eines PID-Reglers ohne Strukturzerlegung. |

Figur 1 zeigt das Strukturbild eines Regelkreises, in welchem ein PID-Regler in einen I-Regler 1 und einen PD-Regler 2 zerlegt ist. Auf den I-Regler 1 ist eine aus einer Führungsgröße w und einer Regelgröße x gebildete Regeldifferenz $x_d$ geführt. Daraus erzeugt der I-Regler 1 einen Integralanteil $y_i$. Auf einen Eingang des PD-Reglers 2 ist lediglich die Regelgröße x geschaltet. Der PD-Regler 2 liefert einen Proportional- und einen Differentialanteil $y_{pd}$. In einem Summierglied 3 werden die beiden Anteile $y_i$ und $y_{pd}$ zu einer Stellgröße y überlagert. Vor dem Eingang eines Prozesses 4 wird eine Störung $z_e$ aufgeschaltet. Als Antwort auf eine derart gestörte Stellgröße $y_{pr}$ liefert der Prozeß 4 eine Regelgröße $x_{pr}$, der wiederum am Ausgang des Prozesses eine Störgröße $z_a$ überlagert wird. Die Regelgröße x schließlich stellt eine Temperatur dar, die beispielsweise mit Thermoelementen erfaßt und auf die Regeleinrichtung zurückgeführt wird. Der Istwert der Temperatur ergibt sich also zu:

$$x(s) = G(s)\big(y(s) + z_e(s)\big) + z_a(s)$$

mit

G(s) - Laplace-transformierte Übertragungsfunktion des Prozesses 4.

Die Gesamtstellgröße y des zerlegten Reglers ist:

$$y(s) = K_i(s)\big(w(s) - x(s)\big) - K_{pd}(s)x(s)$$

mit

$K_i(s)$ - Übertragungsfunktion des I-Reglers 1 und
$K_{pd}(s)$ - Übertragungsfunktion des PD-Reglers 2.

Das Verhalten des Regelkreises in verschiedenen Situationen wird durch folgende Übertragungsfunktionen charakterisiert:

Übertragungsverhalten des unterlagerten PD-Regelkreises:

$$x(s) = G_{pd}(s)y_i(s),$$

$$G_{pd}(s) = \frac{G(s)}{1 + G(s)K_{pd}(s)},$$

$$z_e(s) = z_a(s) \equiv 0$$

mit

$G_{pd}$ - Übertragungsfunktion des unterlagerten Regelkreises.

Führungsverhalten des geschlossenen Regelkreises:

$$x(s) = G_{cl}(s)w(s),$$

$$G_{cl}(s) = \frac{G_{pd}(s)K_i(s)}{1 + G_{pd}(s)K_i(s)},$$

$$z_e(s) = z_a(s) \equiv 0$$

mit

$G_{cl}$ - Übertragungsfunktion des geschlossenen Regelkreises.

Reaktion auf eine Störung am Prozeßeingang:

$$x(s) = G_{ze}(s)z_e(s),$$

$$G_{ze}(s) = \frac{G(s)}{1 + G(s)K(s)},$$

$$w(s) = 0,$$

$$K(s) = K_i(s) + K_{pd}(s)$$

mit

$G_{ze}$ - Übertragungsfunktion des Verhaltens auf eine Störung am Prozeßeingang.

Reaktion auf eine Störung am Prozeßausgang:

$$x(s) = G_{za}(s)z_a(s),$$

$$G_{za}(s) = \frac{1}{1 + G(s)K(s)},$$

$$w(s) = 0$$

mit

$G_{za}$ - Übertragungsfunktion des Verhaltens auf eine Störung am Prozeßausgang.

An den Übertragungsfunktionen $G_{ze}$ und $G_{za}$ ist zu erkennen, daß es für das Störverhalten gleichgültig ist, ob der Regler zerlegt ist oder nicht.

Da Prozesse bei der Temperaturregelung ein verzögerungsbehaftetes Verhalten zeigen, wird zur Modellierung des Prozesses 4 ein VZ2-Modell verwendet mit der Übertragungsfunktion:

$$G(s) = \frac{k}{(t_1 s + 1)(t_2 s + 1)}$$

mit

k - Prozeßverstärkung,
$t_1$ - erste Zeitkonstante des Prozesses und
$t_2$ - zweite Zeitkonstante des Prozesses 4.

In einer Zustandsdarstellung haben VZ2-Prozesse zwei Zustände: den Istwert x und dessen zeitliche Änderung $x^{\bullet} = dx/dt$. Die Übertragungsfunktion G(s) des Prozesses 4 kann damit in eine äquivalente Zustandsraumdarstellung überführt werden:

$$\underline{x} = \begin{bmatrix} x \\ x^{\bullet} \end{bmatrix}, \quad \begin{Bmatrix} \underline{x}^{\bullet} = A\underline{x} + \underline{b}y \\ x = \underline{c}'\underline{x} + dy \end{Bmatrix},$$

$$A = \begin{bmatrix} 0 & 1 \\ -1/t_1 t_2 & -(t_1 + t_2)/t_1 t_2 \end{bmatrix},$$

$$\underline{b} = \begin{bmatrix} 0 \\ k/t_1 t_2 \end{bmatrix},$$

$$\underline{c}' = [1\ 0],$$

$$d = 0$$

mit

- $\underline{x}$ - Zustandsvektor,
- A - Systemmatrix,
- $\underline{b}$ - Eingangsvektor,
- $\underline{c}'$ - transponierter Ausgangsvektor und
- d - Durchgangsfaktor.

Ein Zustandsregler für diesen Prozeß hat die Form:

$$y = -\underline{k}'\ \underline{x} = -(k_1 x + k_2 x^{\bullet})$$

und läßt sich daher mit

$$\underline{k} = k_{pd} \begin{bmatrix} 1 \\ t_{pd} \end{bmatrix}$$

als PD-Regler mit einer Verstärkung $k_{pd}$ und einer Vorhaltzeit $t_{pd}$ realisieren, der im Laplace-Bereich durch eine Übertragungsfunktion $k_{pd}$ beschrieben wird mit

$$K_{pd}(s) = k_{pd}\left(1 + t_{pd}\, s\right).$$

Diese Darstellung eröffnet die Möglichkeit, den PD-Regler für einen VZ2-Prozeß mit den strengen mathematischen Methoden der Optimierung im Zustandsraum zu entwerfen. Vorteilhaft kann dazu ein quadratisches Gütekriterium

$$J = \int_0^{\infty} (\underline{x}'Q\underline{x} + yry)dt$$

mit

J - Güteindex,
Q - Einheitsmatrix und
r - ein Gewichtungsfaktor

minimiert werden, das bei einem dynamischen Ausgleichsvorgang sowohl Abweichungen der Zustände als auch Ausschläge der Stellgröße berücksichtigt. Da alle Zustände für gleich wichtig erachtet werden, kommt für Q die Einheitsmatrix zur Verwendung. In vorteilhafter Weise kann mit der Gewichtung r der Stellausschläge die Charakteristik des Zustandsreglers variiert werden: Je größer der Gewichtungsfaktor r ist, desto stärker verschlechtern Stellgrößenänderungen den Wert des Gütekriteriums und desto vorsichtiger reagiert somit der Regler. Um den trägen Prozeß 4 mit dem PD-Regler 2 möglichst stark zu beschleunigen, wird ein Gewichtungsfaktor r zwischen 0,0002 und 0,02, vorzugsweise gleich 0,002, gewählt. Dabei wird von einer Normierung der Größen w, y, x und $x^{\bullet}$ auf einen Wertebereich bis 100 % ausgegangen.

Die Lösung der beschriebenen Optimierungsaufgabe ist bei einem unter der Bezeichnung MATLAB erhältlichen Software-Tool mit einer einzigen Befehlszeile möglich. Ausgeführt wird durch das Software-Tool jedoch ein komplexer mathematischer Algorithmus, der die zugehörige kontinuierliche Matrix-Riccati-Gleichung löst und im allgemeinen nicht für den Einsatz auf Reglerbaugruppen von Automatisierungsgeräten geeignet ist. Daher kann in vorteilhafter Weise die Optimierung für eine Reihe verschiedener VZ2-Prozesse offline durchgeführt und anschließend versucht werden, aus den Ergebnissen einfache Einstellregeln für den Online-Einsatz abzuleiten. Das hat den Vorteil, daß der Regler mit einfachen Mitteln an verschiedene Prozesse adaptiert werden kann.

Die Optimierung ergibt, daß für verschiedene Prozesse eine Kreisverstärkung des unterlagerten Regelkreises von 21,4 einzustellen ist. Die Verstärkung $k_{pd}$ des PD-Reglers wird daher zu

$$k_{pd} = \frac{21{,}4}{k}$$

vorgegeben. Die kleinere Zeitkonstante des VZ2-Modells wird als zweite Zeitkonstante $t_2$ gewählt. Die Vorhaltzeit

$$t_{pd} = \alpha_{d2}\ t_2$$

richtet sich nach der kleineren Zeitkonstante $t_2$, wobei die Hilfsgröße $\alpha_{d2}$ nichtlinear vom Verhältnis $f = t_1/t_2$ der beiden Zeitkonstanten $t_1$ und $t_2$ abhängt. Anhand der Ergebnisse der Optimierung des Reglers im Zustandsraum wird für den relevanten Bereich $1 < f < 40$ ein Polynom fünfter Ordnung ermittelt, welches die Ergebnisse numerisch approximiert:

$$\alpha_{d2} = 4{,}89 \cdot 10^{-8} \cdot f^5 - 5{,}9290 \cdot 10^{-6} \cdot f^4 + 2{,}7814 \cdot 10^{-4} \cdot f^3 - 0{,}00648 \cdot f^2 + 0{,}08486 \cdot f + 0{,}162.$$

Wenn der PD-Regler nach diesen Formeln eingestellt wird, hat der unterlagerte Regelkreis in vorteilhafter Weise für alle Strecken ein komplexes, gut gedämpftes Polpaar. Die Dämpfung beträgt etwa 0,9 und liegt damit nahe am asymptotischen Grenzfall mit der Dämpfung 1. Ein wesentlicher Vorteil der gezeigten Zerlegung eines PID-Reglers ist, daß der unterlagerte Regelkreis mit der Übertragungsfunktion $G_{pd}$ für eine typische Temperaturstrecke etwa um den Faktor 20 schneller als der ungeregelte Prozeß G auf Änderungen reagiert.

Für den Entwurf des überlagerten I-Reglers 1 mit einer Übertragungsfunktion

$$K_{i1}(s) = \frac{1}{(t_{i1} \cdot s)}$$

sollte berücksichtigt werden, daß in der Praxis kein idealer, sondern ein realer PD-Regler 2 mit verzögertem D-Anteil zum Einsatz kommt, der eine weitere Zeitkonstante in den unterlagerten Regelkreis einbringt. Die Nachstellzeit $t_{i1}$ des

I-Reglers 1 kann von der bereits optimierten Vorhaltzeit $t_{pd}$ des PD-Reglers 2 abhängig gemacht werden:

$$t_{i1} = \alpha_{id} \cdot t_{pd}.$$

In einer Simulationsreihe werden solche Werte für die Hilfsgröße $\alpha_{id}$ gesucht, die ein überschwingfreies Führungsverhalten des geschlossenen Regelkreises mit der Übertragungsfunktion $G_{cl}$ gewährleisten. Dabei ergibt sich für die Hilfsgröße $\alpha_{id}$ ein linearer Zusammenhang:

$$\alpha_{id} = 0{,}179 \,.\, f + 3{,}35.$$

Aus Sicherheitsgründen sollte die Hilfsgröße $\alpha_{id}$ auf einen Minimalwert 3,5 begrenzt werden.

Anstelle des PD-Reglers 2 kann auch ein einfacher P-Regler eingesetzt werden, welcher dann aus der Regelgröße x eine Stellgröße $y_p$ erzeugt. Zur Erläuterung des Entwurfs einer Regeleinrichtung mit einem I-Regler 1 und einem P-Regler 2 wird wieder von der in Figur 1 dargestellten Struktur ausgegangen, wobei lediglich die Ausgangsgröße $y_{pd}$ des bisherigen PD-Reglers durch die neue Ausgangsgröße $y_p$ zu ersetzen ist. Der Entwurf eines auf die gezeigte Art zerlegten PI-Reglers erfolgt in analoger Weise nach dem bereits beschriebenen Schema, so daß es genügt, die resultierenden Einstellformeln anzugeben. Der P-Regler mit einer Übertragungsfunktion $K_p = k_p$ für den unterlagerten Regelkreis kann nicht als Zustandsregler aufgefaßt werden, sondern wird direkt auf eine Dämpfung von 0,9 ausgelegt, indem die Reglerverstärkung zu

$$k_p = \frac{0{,}437f - 0{,}133}{k}$$

gewählt wird. Die Nachstellzeit $t_{i2}$ des überlagerten I-Reglers mit der Übertragungsfunktion

$$K_{i2} = \frac{1}{(t_{i2} \cdot s)}$$

wird von der Zeitkonstante

$$t_{pi} = \frac{2f}{1+f} t_2$$

des geschlossenen unterlagerten Kreises abhängig gemacht. Die Nachstellzeit $t_{i2}$ wird bestimmt zu

$$t_{i2} = \alpha_{ip} t_{pi},$$

mit

$$\alpha_{ip} = -5{,}10414 \cdot 10^{-6} \cdot f^4 + 0{,}000487705 \cdot f^3 - 0{,}0168150 \cdot f^2 + 0{,}263083 \cdot f + 1{,}13409.$$

Die gezeigte Strukturzerlegung eines PI- oder PID-Reglers hat gegenüber der bekannten Strukturumschaltung den Vorteil, daß sich schnellere Nachstellzeiten, insbesondere bei sprungförmigen Störungen und bei exakt überschwingfreiem Verhalten, realisieren lassen.

Bei einem Sollwertsprung erzeugt die bekannte Strukturumschaltung einen Sprung der Stellgröße und ein sehr schnelles Anschwingverhalten. Der Regelkreis braucht aber mit der bekannten Strukturumschaltung etwas Zeit für das endgültige Einschwingen auf den Sollwert. Ein PI- oder PID-Regler mit Strukturzerlegung zeigt dagegen einen stoßfreien Anstieg der Stellgröße mit einer etwas längeren Anstiegszeit, erreicht aber schließlich den eingeschwungenen Zustand am Sollwert schneller. Ein wesentlicher Vorteil der Strukturzerlegung ist jedoch, daß auf eine Strukturumschaltung mit Eingriffen in den Regler während des laufenden Betriebs verzichtet werden kann. Damit ist der neue Regler mit Strukturzerlegung auch bei Prozessen mit zwei Stellgliedern, insbesondere bei einer Temperaturregelstrek-

ke mit einer Heizung und einer Kühlung, mit Vorteil einsetzbar. Die Regeleinrichtung ist zudem vorteilhaft für eine automatische Inbetriebnahme geeignet, beispielsweise mit einem PC-gestützten Regler-Inbetriebnahmeverfahren, da die Strukturzerlegung beim Entwurf eines Software-Reglers festgelegt und als dauerhafte Parametrierung auf einen Regler geladen werden kann.

In Figur 2 ist das Modell einer Temperaturregelstrecke mit zwei Stellgliedern und einer vorgeschalteten Split-Range-Einheit 5 dargestellt. Das Modell der Temperaturregelstrecke untergliedert sich in ein Modell 6 für Heizen, ein Modell 7 für Kühlen sowie ein Modell 8, das zur Ausgabe der Temperatur des Beharrungszustands dient, welcher sich bei ausgeschalteter Heizung und Kühlung einstellt. Die Modelle 6 und 7 können beispielsweise VZ2-Glieder mit gleichen Zeitkonstanten sein, die sich jedoch in ihrer Verstärkung unterscheiden. Ausgangsgrößen $x_h$, $x_k$ und $x_b$ der Modelle 6, 7 bzw. 8 werden in einem Summierglied 9 überlagert, welches eine resultierende Regelgröße $x_{pr}'$ erzeugt. Die Split-Range-Einheit 5 besteht aus zwei Kennlinien-Gliedern 10 und 11. Bei positiven Werten einer an die Split-Range-Einheit 5 angelegten Stellgröße $y_{pr}'$ gibt das Kennlinien-Glied 10 die Stellgröße unverändert an das Modell 6 für Heizen aus, während das Kennlinien-Glied 11 den Wert "0" an das Modell 7 für Kühlen liefert und somit die Kühlung ausschaltet. Andererseits wird bei negativen Werten der Stellgröße $y_{pr}'$ durch das Kennlinien-Glied 10 die Heizung ausgeschaltet und von dem Kennlinien-Glied 11 der mit einem Faktor p gewichtete Wert der Stellgröße $y_{pr}'$ auf das Modell 7 für Kühlen gegeben.

Die einfachste Kenngröße, die das unterschiedliche Verhalten beim Heizen und Kühlen charakterisiert, ist das Verhältnis von maximaler Steigung der Regelgröße $x_{pr}'$ bei eingeschalteter Heizung zu maximaler Steigung bei eingeschalteter Kühlung. Eine stationäre Verstärkung der Kühlung ist nicht ohne weiteres zu ermitteln, da man hierzu bei bekannten Parametern des Modells für Heizen Heizung und Kühlung gleichzeitig betreiben müßte. Da ein vorgeschalteter Regler aufgrund der Split-Range-Einheit 5 jedoch eine von Null verschiedene Stellgröße $y_h$ an das Modell 6 für Heizen ausgibt, wenn die Stellgröße $y_{pr}'$ positiv ist, und eine von Null verschiedene Stellgröße $y_k$ an das Modell 7 für Kühlen, wenn diese negativ ist, gibt es keinen Wert der Stellgröße $y_{pr}'$, bei welchem Heizung und Kühlung gleichzeitig aktiviert werden. Im Normalbetrieb einer Temperaturregelung wäre dies auch reine Energieverschwendung.

Um die Verstärkung des Modells 7 für Kühlen zu identifizieren, ist folgende Modellvorstellung hilfreich. Die Wärmeverluste des Prozesses an die Umgebung werden dabei vernachlässigt. Das Verhalten des Prozesses während der Anfangsphase des Aufheizens läßt sich dann in Abhängigkeit einer Stellgröße $y_h$ für Heizen zumindest näherungsweise durch ein IT1-Modell, d. h. durch einen verzugsbehafteten Integrator, beschreiben:

$$x_h(s) = G_{ih}(s)y_h(s),$$

$$G_{ih}(s) = \frac{k_{ih}}{s(t_{2h}s + 1)}$$

mit

- $G_{ih}(s)$ - Übertragungsfunktion in der Anfangsphase des Heizvorgangs,
- $k_{ih}$ - Verstärkung für Heizen und
- $t_{2h}$ - zweite Zeitkonstante des Modells 6 für Heizen.

In entsprechender Weise wird auch das Verhalten in der Anfangsphase einer Kühlung durch den folgenden verzugsbehafteten Integrator beschrieben:

$$x_k(s) = G_{ik}(s)y_k(s),$$

$$G_{ik}(s) = \frac{k_{ik}}{s(t_{2k}s + 1)}$$

mit

- $G_{ik}(s)$ - Übertragungsfunktion des Modells 7 in der Anfangsphase für Kühlen,
- $k_{ik}$ - Verstärkung und
- $t_{2k}$ - zweite Zeitkonstante des Modells 7 für Kühlen.

Figur 3 zeigt einen Regelkreis mit einer Regeleinrichtung, die auch die Teile enthält, die zu einer automatischen Identifikation des Prozesses anhand der oben beschriebenen Modellvorstellung erforderlich sind. Die Funktionsweise und der Entwurf eines Reglers 30 nach erfolgter Prozeßidentifikation wurden bereits anhand Figur 1, die Funktionsweise einer Split-Range-Einheit 5 anhand Figur 2 beschrieben. Für gleiche Teile werden gleiche Bezugszeichen verwendet.

Ein Prozeß 32 ist in Figur 3 mit einer Heizung 33 und einer Kühlung 34 versehen. Die Temperatur des Prozesses wird als Regelgröße x auf den Regler 30 zurückgeführt.

Vor einem Identifikationsvorgang wird zunächst ein Faktor p durch eine Steuereinheit 35 auf den Wert "1" gesetzt, so daß auch negative Werte der Stellgröße y durch das Kennlinien-Glied 11 ohne eine zusätzliche Gewichtung an die Kühlung 34 des Prozesses 32 ausgegeben werden. Ein automatischer Identifikationsvorgang wird durch ein Anforderungssignal 36 eingeleitet, das die Steuereinheit 35 von einer in Figur 3 nicht dargestellten Bedieneinheit empfängt. Mit einem Signal 37 legt die Steuereinheit 35 einen Schalter 38 um, damit die Stellgröße y nicht durch den Regler 30, sondern durch die Steuereinheit 35 mit einem Signal 39 vorgegeben wird. Ein Anforderungssignal 36 kann beispielsweise gleichzeitig mit der ersten Inbetriebnahme der Regeleinrichtung bei einem ersten Sprung der Führungsgröße w erzeugt werden.

In den Figuren 4 und 5 sind die Verläufe der Führungsgröße w, der Regelgröße x und der Stellgröße y während der automatischen Identifikation des Prozesses 32 und einer anschließenden Störungskompensation aufgezeichnet. An den Abszissen der Diagramme in den Figuren 4 und 5 ist die Zeit t in Sekunden, an der Ordinate in Figur 4 die Temperatur in °C und an der Ordinate in Figur 5 die Stellgröße in % aufgetragen. Zu einem Zeitpunkt t = 0 s befindet sich der Prozeß 32 in einem ersten stationären Zustand, bei welchem der Wert der Regelgröße x 0 °C beträgt. Zum Zeitpunkt t = 0 s wird die Führungsgröße w sprungförmig von zuvor 0 °C auf den Wert 170 °C gesetzt. Die Steuereinheit 35 setzt daraufhin mit dem Signal 39 die Stellgröße y auf einen konstanten Wert +80 %, bei welchem 80 % der Heizleistung auf den Prozeß 32 gegeben werden und die Kühlung 34 abgeschaltet ist. Etwa zum Zeitpunkt t = 1100 s wird ein Wendepunkt im Verlauf der Regelgröße x durch die Steuereinheit 35 festgestellt und, wie bereits aus der eingangs erwähnten deutschen Patentanmeldung mit dem amtlichen Aktenzeichen 19722431.8 bekannt, ein erstes IT1-Modell identifiziert, welches das Verhalten des Prozesses beim Heizvorgang zumindest näherungsweise beschreibt. Mit einem in Abhängigkeit des ersten IT1-Modells bestimmten Reglerverhalten regelt die Steuereinheit 35 zwischen etwa den Zeitpunkten t = 1100 s und t = 6800 s den Prozeß 32 in die Nähe eines zweiten stationären Zustands, bei welchem die Regelgröße x den Wert 170 °C der Führungsgröße w erreicht. In bereits bekannter Weise kann aus einer Wendetangente wh und dem zweiten stationären Zustand ein VZ2-Modell ermittelt werden, das die Verstärkung der Heizung 33 und die Dynamik des Prozesses 32 beschreibt.

Aus dem zweiten stationären Zustand bei 170 °C heraus setzt die Steuereinheit 35 das Signal 39 auf den Wert -20 %, der über den Schalter 38 zum Zeitpunkt t = 6800 s auf das Stellsignal y gegeben wird. Bei diesem Wert des Stellsignals y schaltet die Split-Range-Einheit 5 die Heizung 33 aus und stellt die Kühlung 34 auf 20 % der maximalen Kühlleistung. Der Wert des Stellsignals wird konstant auf diesem Wert $y_{LLM_TUN}$ gehalten, bis ein Wendepunkt im Verlauf der Regelgröße x (siehe Figur 4) erkennbar ist.

Eine einfache und wirkungsvolle Identifikation der Verstärkung während des Kühlvorgangs wird erreicht, indem abweichend von dem tatsächlichen, das Prozeßverhalten beschreibenden VZ2-Modell während der Anfangsphase des Kühlvorgangs wie schon während der Anfangsphase des Heizvorgangs jeweils die oben beschriebenen IT1-Modelle angenommen werden. Entsprechend der in Figur 2 dargestellten Struktur ergibt sich dann der Istwert der Regelgröße x nach der Formel:

$$x = x_h - x_k,$$

da sich die Wirkungen von Heizung und Kühlung im Summierglied 9 überlagern.

In der Anfangsphase der Kühlung zum Zeitpunkt t = 6800 s, in welcher der Prozeß vom Arbeitspunkt aus plötzlich gekühlt wird, überlagern sich zwei Effekte: ein Sprung der Kühlleistung von 0 auf $y_{LLM_TUN}$ sowie ein Sprung der Heizleistung vom stationären Wert $y_\infty$ am Arbeitspunkt zurück auf den Wert 0 mit einer Sprunghöhe $-y_\infty$. Die gemessene Steigung

$$\frac{dx_{wk}}{dt} = k_{ih}(-y_\infty) + k_{ih} y_{LLM_TUN}$$

am Kühl-Wendepunkt, die in Figur 4 durch die Wendetangente wk markiert wird, setzt sich also aus zwei Anteilen zusammen, von denen der eine Anteil, nämlich $k_{ih}(-y_\infty)$, bereits von der Wendetangente wh beim Heizvorgang und dem stationären Endwert ermittelt werden konnte. Diese Gleichung kann nach der gesuchten Verstärkung $k_{ik}$ beim

Kühlen aufgelöst werden:

$$k_{ik} = \frac{dx_{wk}/dt + k_{ih} \cdot y_{\infty}}{y_{LLM_TUN}}.$$

Das ermittelte Verhältnis der Verstärkungen $k_{ih}$ und $k_{ik}$ wird für eine Anpassung der Verstärkung negativer Signale mit dem Faktor p von der Steuereinheit 35 auf das Kennlinien-Glied 11 der Split-Range-Einheit 5 (siehe Figur 3) gegeben:

$$p = \frac{k_{ih}}{k_{ik}}.$$

Danach parametriert die Steuereinheit 35 den I-Regler 1 und den PD-Regler 2 des Reglers 30 und legt den Schalter 38 um, so daß die im Regler 30 erzeugte Stellgröße y' als Stellgröße y auf die Split-Range-Einheit 5 gegeben wird. Dies geschieht etwa zum Zeitpunkt t = 7800 s (siehe Figur 5). Durch den Regler 30 wird der Prozeß 32 wieder zum Arbeitspunkt bei der Temperatur 170 °C hochgeheizt. Nach erfolgreicher Ersteinstellung ist in den Figuren 4 und 5 die Reaktion auf eine plötzliche Störung $z_e$ der Höhe 40 % am Prozeßeingang dargestellt, wie sie an einem Kunststoff-Extruder bei Produktionsbeginn durch die Inbetriebnahme der Förderschnecke entsteht. Die Störung tritt etwa zum Zeitpunkt t = 12500 s auf. Als Reaktion auf diese Störung geht die Regeleinrichtung in vorteilhafter Weise stoßfrei vom Heizbetrieb in den Kühlbetrieb über, wie es am Verlauf der Stellgröße y nach dem Zeitpunkt t = 12500 s gut erkennbar ist. Entsprechend dem Verlauf der Regelgröße x in Figur 4 verursacht die Störung $z_e$ nur einen kurzen Ausschlag auf ca. 180 °C und die Regelgröße x erreicht bereits nach kurzer Zeit wieder den Sollwert 170 °C.

Bei den Simulationen des Regelkreises wurde ein Prozeßmodell verwendet, wie es in Figur 2 dargestellt ist. Das Modell 6 für Heizen und das Modell 7 für Kühlen sind jeweils VZ2-Modelle mit gleicher Dynamik. Die Zeitkonstante $t_1$ wurde auf 3700 s, die Zeitkonstante $t_2$ auf 350 s gesetzt. Beim Kühlen wurde eine Verstärkung k = 12, beim Heizen eine Verstärkung k = 6 angenommen. Diese Werte sind vom Verhalten eines realen Kunststoff-Extruders abgeleitet.

Als Ergebnis der Ersteinstellung wurde für den Prozeß eine Verstärkung k = 5,8788 beim Heizen, eine erste Zeitkonstante $t_1$ = 3613 s und eine zweite Zeitkonstante $t_2$ = 370 s bestimmt. Als Verhältnis der Verstärkungen $k_{ih} : k_{ik}$ wurde der Wert 0,43 ermittelt, der dem theoretischen Idealwert von 0,5 hinreichend nahekommt. Entsprechend diesem Ergebnis der Prozeßidentifikation wird die Nachstellzeit $t_{i1}$ des I-Reglers 1 auf 1098 s, die Verstärkung $k_{pd}$ und die Vorhaltzeit $t_{pd}$ des PD-Reglers 2 auf 3,6402 bzw. 215 s gesetzt.

Mit einem binären Signal 40, das auf die Steuereinheit 35 geführt ist, kann in der Regeleinrichtung eingestellt werden, ob eine Identifikation während eines Kühlvorgangs durchgeführt werden soll. Durch diese Maßnahme kann die Regeleinrichtung an die jeweiligen Gegebenheiten der Zonen eines Kunststoff-Extruders angepaßt werden, so daß sie auch für reine Heizzonen eingesetzt werden kann. Das ist vorteilhaft, da an einem Kunststoff-Extruder meist beide Formen, d. h. Zonen mit Heizung und Kühlung sowie Zonen mit reiner Heizung, gemischt auftreten.

Insbesondere bei einer Gebläsekühlung ist es vorteilhaft, den Kühlvorgang zur Identifikation der Verstärkung des Modells für Kühlen aus dem Arbeitspunkt heraus einzuleiten. Die Kühlleistung wird nämlich stark vom Verhältnis der Prozeßtemperatur zur Umgebungstemperatur beeinflußt. Wenn in einem Kunststoff-Extruder für verschiedene Kunststoffe jeweils unterschiedliche Arbeitspunkte eingestellt werden müssen, kann diese Abhängigkeit durch ein Kennlinien-Glied im Signalpfad des Faktors p in Figur 3 kompensiert werden. Im Extremfall, wenn die Prozeßtemperatur gleich der Umgebungstemperatur ist, wird die Gebläsekühlung unwirksam.

Zur Verdeutlichung der Wirkungsweise der Kaskadenregelung sind in den Figuren 6, 7 und 8 Sprungantworten der oben berechneten Übertragungsfunktionen G, $G_{pd}$ und $G_{cl}$ dargestellt. D. h., an die Simulationsmodelle der jeweiligen Übertragungsglieder wurde ein Sprung der Höhe 1 zum Zeitpunkt t = 0 s angelegt. Der Zeitmaßstab auf der Abszisse ist jeweils gleich. Am linken Ende der Abszisse ist der Zeitpunkt t = 0 s, am rechten Ende der Zeitpunkt t = 25000 s markiert. Die Sprungantwort der Strecke mit der Übertragungsfunktion G erreicht gemäß Figur 6 erst bei etwa 10000 s 90 % des stationären Endwerts 6, welcher der Verstärkung k des Prozesses entspricht. Wie in Figur 7 dargestellt, reagiert der unterlagerte Regelkreis mit einem PD-Regler 2 auf einen Einheitssprung des Integralanteils $y_i$ wesentlich schneller und erreicht bereits nach ca. 1000 s 90 % des stationären Endwerts. Die Strecke 6 wird somit durch den PD-Regler 2 wesentlich beschleunigt. Bei einem Einheitssprung der Führungsgröße w zum Zeitpunkt t = 0 s erreicht die Regelgröße x, wie in Figur 8 dargestellt, genau und überschwingungsfrei den Wert 1 der Sollgröße w. Bereits nach ca. 2000 s hat sie 90 % des stationären Endwerts überschritten.

Die Figuren 9, 10 und 11 zeigen Sprungantworten von Übertragungsgliedern mit den Übertragungsfunktionen $G_{ze}$, $G_{za}$ bzw. mit einer Übertragungsfunktion, die zum Vergleich für einen Regelkreis mit einem unzerlegten PID-Regler ermittelt wurde. An der Abszisse der Figuren 9, 10 und 11 ist die Zeit t in Sekunden linear aufgetragen. Am linken Ende

der Skala befindet sich der Zeitpunkt t = 0 s, am rechten Ende der Zeitpunkt t = 3000 s. Auf einen Einheitssprung der Störgröße $z_e$ reagiert gemäß Figur 9 der Regelkreis mit zerlegtem PID-Regler mit einem Ausschlag der Regelgröße x, der den Wert 0,2 kaum übersteigt. Bereits nach 2500 s ist die Störung fast vollständig ausgeregelt. An den Verläufen der Regelgröße x in den Figuren 10 und 11 ist zu erkennen, daß die simulierte Antwort auf eine Störung $z_a$ am Prozeßausgang prinzipiell dem Führungsverhalten mit einem unzerlegten PID-Regler, d. h. einem PID-Regler, bei welchem die Regeldifferenz auf den I-und den PD-Regler geführt ist, entspricht und einen Überschwinger von etwa 15 % aufweist. Die unterschiedliche Polarität, die sich aufgrund der Vorzeichen an den Summationsgliedern in Figur 1 ergibt, führt dabei zu spiegelbildlichen Verläufen. Eine sprungförmige Störung am Prozeßausgang tritt jedoch in der Praxis nicht auf, da sich bei einer Temperaturregelung die Regelgröße x, nämlich die Temperatur eines realen trägen Systems, nicht schlagartig ändern kann. Bei einem Vergleich der Verläufe der Regelgröße x in den Figuren 8 und 11 wird deutlich, daß der Regler 30 mit Strukturzerlegung bei einem schnelleren Anstieg überschwingungsfrei den neuen Sollwert erreicht.

Eine Regeleinrichtung zur Durchführung des Verfahrens kann vorteilhaft mit einer internen Ablaufsteuerung mit mehreren verschiedenen Phasen realisiert werden, die sich in den Betriebsarten der Regeleinrichtung sowie den Modellen unterscheiden, die der Prozeßidentifikation zugrundegelegt werden. Die Regeleinrichtung kann gleichermaßen als Hardware-Schaltung oder als Recheneinheit mit einem Programmspeicher, in den ein geeignetes Betriebsprogramm geladen wurde, ausgeführt werden.

## Patentansprüche

1. Verfahren zur Identifikation eines verzögerungsbehafteten Prozesses mit Ausgleich, insbesondere einer Temperaturregelstrecke, wobei der Prozeß (32) mit zumindest einem ersten Stellglied (33), insbesondere zum Heizen des Prozesses (32), und einem zweiten Stellglied (34), insbesondere zum Kühlen des Prozesses, versehen ist, die mit verschiedenen Verstärkungen auf den Prozeß wirken und sich in ihren Wirkungen einander überlagern, **dadurch gekennzeichnet,**

   **daß** aus einem ersten stationären Zustand heraus die Stellgröße (y) des ersten Stellglieds (33) auf einen ersten konstanten Wert (80 %) gesetzt und die Stellgröße des zweiten Stellglieds (34) abgeschaltet wird,

   **daß**, nachdem ein erster Wendepunkt im Verlauf der Regelgröße (x) festgestellt wurde, ein erstes IT1-Modell des Prozesses (32) identifiziert wird,

   **daß** der Prozeß in Abhängigkeit von dem ersten IT1-Modell zumindest in die Nähe eines zweiten, vom ersten stationären Zustand abweichenden stationären Zustands (170 °C) geregelt wird,

   **daß** anhand der Wendetangente (wh) im ersten Wendepunkt und anhand der Werte der Stellgröße (y) sowie der Regelgröße (x) im ersten und im zweiten stationären Zustand ein VZ2-Modell identifiziert wird, welches die Dynamik des Prozesses (32) und die Verstärkung für das erste Stellglied (33) beschreibt,

   **daß** aus dem zweiten stationären Zustand heraus das erste Stellglied (33) abgeschaltet und die Stellgröße des zweiten Stellglieds (34) auf einen zweiten konstanten Wert (20 %) gesetzt wird,

   **daß**, nachdem ein zweiter Wendepunkt im Verlauf der Regelgröße (x) festgestellt wurde, eine Prozeßverstärkung $k_{ik}$ für das zweite Stellglied (34) bestimmt wird nach der Formel

   $$k_{ik} = \frac{dx_{wk}/dt + k_{ih} \cdot y_\infty}{y_{LLM_TUN}}$$

   mit

   | | |
   |---|---|
   | $dx_{wk}/dt$ - | Steigung der Tangente (wk) im zweiten Wendepunkt, |
   | $k_{ih}$ - | Prozeßverstärkung des identifizierten ersten IT1-Modells, |
   | $y_\infty$ - | Wert der im zweiten stationären Zustand ausgegebenen Stellgröße (y) und |
   | $y_{LLM_TUN}$ - | zweiter konstanter Wert der Stellgröße. |

2. Verfahren nach Anspruch 1, **dadurch gekennzeichnet, daß** das erste Stellglied (33) eine Heizung und das zweite Stellglied (34) eine Kühlung ist, daß der zweite stationäre Zustand (170 °C) einem typischen Arbeitspunkt des Prozesses (32) entspricht.

3. Einrichtung zur Regelung eines verzögerungsbehafteten Prozesses mit Ausgleich, insbesondere eines Kunststoff-Extruders, wobei der Prozeß (32) mit zumindest einem ersten Stellglied (33), insbesondere zum Heizen des Prozesses (32), und einem zweiten Stellglied (34), insbesondere zum Kühlen des Prozesses (32), versehen ist, die

mit verschiedenen Verstärkungen auf den Prozeß (32) wirken und sich in ihren Wirkungen einander überlagern, mit einem Regler (30), der aus einer Regeldifferenz ($x_d$), die aus einer Führungsgröße (w) und einer Regelgröße (x) gebildet wird, eine Stellgröße (y) erzeugt,
**gekennzeichnet durch**
eine Steuereinheit (35), derart, daß aus einem ersten stationären Zustand heraus die Stellgröße (y) des ersten Stellglieds (33) auf einen ersten konstanten Wert (80 %) gesetzt und die Stellgröße des zweiten Stellglieds (34) abgeschaltet wird,
daß, nachdem ein erster Wendepunkt im Verlauf der Regelgröße (x) festgestellt wurde, ein erstes IT1-Modell des Prozesses (32) identifiziert wird,
daß der Prozeß in Abhängigkeit von dem ersten IT1-Modell zumindest in die Nähe eines zweiten, vom ersten stationären Zustand abweichenden stationären Zustands (170 °C) geregelt wird,
daß anhand der Wendetangente (wh) im ersten Wendepunkt und anhand der Werte der Stellgröße (y) sowie der Regelgröße (x) im ersten und im zweiten stationären Zustand ein VZ2-Modell identifiziert wird, welches die Dynamik des Prozesses (32) und die Verstärkung für das erste Stellglied (33) beschreibt,
daß aus dem zweiten stationären Zustand heraus das erste Stellglied (33) abgeschaltet und die Stellgröße des zweiten Stellglieds (34) auf einen zweiten konstanten Wert (20 %) gesetzt wird,
daß, nachdem ein zweiter Wendepunkt im Verlauf der Regelgröße (x) festgestellt wurde, eine Prozeßverstärkung $k_{ik}$ für das zweite Stellglied (34) bestimmt wird nach der Formel

$$k_{ik} = \frac{dx_{wk}/dt + k_{ih} \cdot y_{\infty}}{y_{LLM_TUN}}$$

mit

| | |
|---|---|
| $dx_{wk}/dt$ - | Steigung der Tangente (wk) im zweiten Wendepunkt, |
| $k_{ih}$ - | Prozeßverstärkung des identifizierten ersten IT1-Modells, |
| $y_{\infty}$ - | Wert der im zweiten stationären Zustand ausgegebenen Stellgröße (y) und |
| $Y_{LLM_TUN}$ - | zweiter konstanter Wert der Stellgröße. |

**4.** Einrichtung nach Anspruch 3, **gekennzeichnet durch** einen I-Regler (1), der aus einer Regeldifferenz ($x_d$), die aus einer Führungsgröße (w) und einer Regelgröße (x) gebildet wird, einen Integralanteil ($y_i$) erzeugt, **durch** einen P-Regler oder einen PD-Regler (2), der in einem unterlagerten Regelkreis aus der Regelgröße (x) einen Proportionalanteil ($y_p$) bzw. einen Proportional- und einen Differentialanteil ($y_{pd}$) erzeugt, und **durch** ein Summierglied (3) zur Überlagerung der von den Reglern (1, 2) erzeugten Anteile ($y_i$, $y_p$, $y_{pd}$) zu einer Stellgröße (y) für den Prozeß (4).

**5.** Einrichtung nach Anspruch 4, **dadurch gekennzeichnet,**
**daß** dem Summierglied (3) eine Split-Range-Einheit (5) nachgeschaltet ist, derart, daß der Wertebereich der durch das Summierglied (3) erzeugten Stellgröße (y) in zwei Teilbereiche unterteilt ist,
**daß** bei einem Wert der Stellgröße (y) in einem ersten Teilbereich (0 bis 100 %) eine Stellgröße für eine Heizung (33) ausgegeben und eine Kühlung (34) abgeschaltet wird und
**daß** bei einem Wert der Stellgröße (y) in einem zweiten Teilbereich (-100 % bis 0) eine Stellgröße für die Kühlung (34) ausgegeben und die Heizung (33) abgeschaltet wird.

**6.** Einrichtung nach Anspruch 5, **dadurch gekennzeichnet,**
**daß** der Wertebereich der durch das Summierglied (3) erzeugten Stellgröße einen positiven und einen negativen Teilbereich umfaßt,
**daß** bei einem Wert der Stellgröße im positiven Teilbereich die Stellgröße unverändert an die Heizung (33) ausgegeben wird und
**daß** bei einem Wert der Stellgröße im negativen Teilbereich die Stellgröße (y) mit einem Faktor (p) gewichtet an die Kühlung (34) ausgegeben wird, der dem Verhältnis der Verstärkung $k_{ih}$ der Heizung (33) zur Verstärkung $k_{ik}$ der Kühlung (34) entspricht.

**7.** Einrichtung nach einem der Ansprüche 4 bis 6, **dadurch gekennzeichnet, daß** im Falle eines PD-Reglers (2) im unterlagerten Regelkreis die Verstärkung $k_{pd}$ und Vorhaltzeit $t_{pd}$ durch einen Reglerentwurf nach den mathematischen Methoden der Optimierung im Zustandsraum berechnet sind.

**8.** Einrichtung nach Anspruch 7, **dadurch gekennzeichnet, daß** zur Optimierung im Zustandsraum ein Gütekriterium

$$J = \int_0^\infty (\underline{x}'Q\underline{x} + yry)dt$$

mit

$\underline{x}' = (x, \dot{x})$ - transponierter Zustandsvektor,
$\underline{x}$ - Zustandsvektor,
Q - Einheitsmatrix,
y - Stellgröße und
r - ein Gewichtungsfaktor zwischen 0,0002 und 0,02

minimiert wird.

**9.** Einrichtung nach einem der Ansprüche 4 bis 6, **dadurch gekennzeichnet, daß** im Falle eines PD-Reglers (2) im unterlagerten Regelkreis die Verstärkung $k_{pd}$ und die Vorhaltzeit $t_{pd}$ des Reglers (2) zumindest näherungsweise bestimmt sind nach den Formeln

$$k_{pd} = \frac{21{,}4}{k},$$

$$t_{pd} = \alpha_{d2} \cdot t_2$$

*und*

$$\alpha_{d2} = 4{,}89 \cdot 10^{-8} \cdot f^5 - 5{,}9290 \cdot 10^{-6} \cdot f^4 + 2{,}7814 \cdot 10^{-4} \cdot f^3 - 0{,}00648 \cdot f^2 + 0{,}08486 \cdot f + 0{,}162$$

mit

k - Streckenverstärkung,
$t_1$, $t_2$ - Zeitkonstanten der Strecke,
$\alpha_{d2}$ - eine Hilfsgröße und
$f = t_1/t_2$ - Verhältnis der Streckenzeitkonstanten.

**10.** Einrichtung nach einem der Ansprüche 7 bis 9, **dadurch gekennzeichnet, daß** die Nachstellzeit $t_{i1}$ des I-Reglers (1) zumindest näherungsweise bestimmt ist nach der Formel

$$t_{i1} = (0{,}179 \cdot f + 3{,}35) \cdot t_{pd}$$

mit

$f = t_1/t_2$ - Verhältnis der Streckenzeitkonstanten $t_1$ und $t_2$ und
$t_{pd}$ - Vorhaltzeit des PD-Reglers (2).

**11.** Einrichtung nach Anspruch 4, **dadurch gekennzeichnet, daß** im Falle eines P-Reglers im unterlagerten Regelkreis die Verstärkung $k_p$ des P-Reglers zumindest näherungsweise bestimmt ist nach der Formel

$$k_p = \frac{0{,}437f - 0{,}133}{k}$$

mit

$f = t_1/t_2$ - Verhältnis der Streckenzeitkonstanten $t_1$ und $t_2$ sowie
$k$ - Streckenverstärkung.

**12.** Einrichtung nach Anspruch 11, **dadurch gekennzeichnet, daß** die Nachstellzeit $t_{i2}$ des I-Reglers zumindest näherungsweise bestimmt ist nach den Formeln

$$t_{i2} = \alpha_{ip} t_{pi}\ ,$$

$$t_{pi} = \frac{2f}{1+f} t_2$$

$$\alpha_{ip} = -5{,}10414 \cdot 10^{-6} \cdot f^4 + 0{,}000487705 \cdot f^3 - 0{,}0168150 \cdot f^2 + 0{,}263083 \cdot f + 1{,}13409$$

mit

$\alpha_{ip}$ - eine Hilfsgröße und
$t_{pi}$ - Zeitkonstante des geschlossenen unterlagerten Regelkreises.

## Claims

**1.** Method for identification of a process with compensation with a delay, in particular a temperature control system, wherein the process (32) has at least one first correction element (33), in particular for heating the process (32), and a second correction element (34), in particular for cooling the process, which act with different amplifications on the process and are overlaid in their effects, **characterised in that** from a first stationary state the controlled variable (y) of the first correction element (33) is set to a first constant value (80%) and the controlled variable of the second correction element (34) is disconnected,
that after a first inflection point has been established in the course of the correcting variable (x), a first IT1 model of the process (32) is identified,
that the process is adjusted as a function of the first IT1 model at least in the vicinity of a second stationary state (170°C) deviating from the first stationary state,
that from the inflectional tangent (wh) in the first inflection point and from the values of the controlled variable (y) and the correcting variable (x) in the first and second stationary state, a VZ2 model is identified which describes the dynamics of the process (32) and the amplification for the first correction element (33),
that from the second stationary state the first correction element (33) is disconnected and the controlled variable of the second correction element (34) set to a second constant value (20%),
that after a second inflection point has been established in the course of the correcting variable (x) a process amplification $k_{ik}$ is determined for the second correction element (34) according to the formula

$$k_{ik}\ \frac{dx_{wk}/dt + k_{ih} \cdot y_{\infty}}{y_{LLM_TUN}}$$

with

$dx_{wk}/dt$ - gradient of tangent (wk) at the second inflection point,
$k_{ih}$ - process amplification of the identified first IT1 model,
$y_{\infty}$ - value of the controlled variable (y) output in the second stationary state, and
$y_{LLM_TUN}$ - second constant value of the controlled variable.

**2.** Method according to claim 1, **characterised in that** the first correction element (33) is a heating and the second correction element (34) a cooling,
that the second stationary state (170°C) corresponds to a typical working point of the process (32).

**3.** Device for controlling a process with compensation with a delay, in particular a plastic extruder, wherein the process (32) has at least one first correction element (33), in particular for heating the process (32), and a second correction

element (34), in particular for cooling the process (32), which act with different amplifications on the process (32) and are overlaid in their effects,
with a controller (30) which from a control difference ($x_d$) formed from a guide variable (w) and a correcting variable (x) generates a controlled variable (y), **characterised by** a control unit (35) such that from the first stationary state the controlled variable (y) of the first correction element (33) is set to a first constant value (80%) and the controlled variable of the second correction element (34) is disconnected, that after a first inflection point has been established in the course of the correcting variable (x), a first IT1 model of the process (32) is identified,
that the process is adjusted as a function of the first IT1 model at least in the vicinity of a second stationary state (170°C) deviating from the first stationary state,
that from the inflectional tangent (wh) in the first inflection point and from the values of the controlled variable (y) and the correcting variable (x) in the first and second stationary state, a VZ2 model is identified which describes the dynamics of the process (32) and the amplification for the first correction element (33),
that from the second stationary state the first correction element (33) is disconnected and the controlled variable of the second correction element (34) set to a constant second value (20%),
that after a second inflection point has been established in the course of the correcting variable (x) a process amplification $k_{ik}$ is determined for the second correction element (34) according to the formula

$$k_{ik} \frac{dx_{wk} / dt + k_{ih} \cdot y_{\infty}}{y_{LLM_TUM}}$$

with

| | |
|---|---|
| $dx_{wk}/dt$ - | gradient of tangent (wk) at the second inflection point, |
| $k_{ih}$ - | process amplification of the identified first IT1 model, |
| $y_{\infty}$ - | value of the controlled variable (y) output in the second stationary state, and |
| $y_{LLM_TUN}$ - | second constant value of the controlled variable. |

4. Device according to claim 3, **characterised by** an I controller (1) which from a control difference ($x_d$) formed from a guide variable (w) and a correcting variable (x) generates an integral part ($y_i$), by a P controller or a PD controller (2) which in a subordinate control loop generates from the correcting variable (x) a proportional part ($y_p$) or a proportional and a differential part ($y_{pd}$), and by a summing element (3) to overlay the parts ($y_i$, $y_p$, $y_{pd}$) generated by the controllers (1, 2) into a controlled variable (y) for the process (4).

5. Device according to claim 4, **characterised in that** after the summing element (3) is connected a split range unit (5) such that the value range of the controlled variable (y) formed by the summing element (3) is divided into two part areas,
that for a value of the controlled variable (y) in a first part range (0 to 100%), a controlled variable is output for a heating (33) and a cooling (34) is disconnected, and
that for a value of the controlled variable (y) in a second part range (-100% to 0), a controlled variable for the cooling (34) is output and the heating (33) is switched off.

6. Device according to claim 5, **characterised in that** the value range of the controlled variable generated by the summing element (3) comprises a positive and a negative part range,
that for a value of the controlled variable in the positive part range, the controlled variable is output to the heater (33) unchanged, and
that for a value of the controlled variable in the negative part range, the controlled variable (y) is output to the cooling (34) weighted by a factor (p) which corresponds to the ratio of amplification $k_{ih}$ of the heating (33) to the amplification $k_{ik}$ of the cooling (34).

7. Device according to any one of claims 4 to 6, **characterised in that** in the case of a PD controller (2) in the subordinate control loop, the amplification $k_{pd}$ and retention time $t_{pd}$ are calculated by a controller design according to the mathematical method of optimisation in the state space.

8. Device according to claim 7, **characterised in that** for optimisation in the state space, a quality criterion is minimised

$$J = \int_0^\infty (\underline{x}'Q\underline{x} + yry)\,dt$$

with

$\underline{x}' = (x, \dot{x})$ - transposed state vector,
$\underline{x}$ - state vector,
$Q$ - unit matrix,
$y$ - controlled variable and
$r$ - a weighting factor between 0.0002 and 0.02.

**9.** Device according to any one of claims 4 to 6, **characterised in that** in the case of a PD controller (2) in the subordinate control loop the amplification $k_{pd}$ and retention time $t_{pd}$ of controller (2) are determined at least approximately according to the formulae

$$k_{pd} = \frac{21.4}{k}$$

$$t_{pd} = \alpha_{d2} \cdot t_2$$

and

$$\alpha_{d2} = 4.89 \cdot 10^{-8} \cdot f^5 - 5.9290 \cdot 10^{-6} \cdot f^4 + 2.7814 \cdot 10^{-4} \cdot f^3 - 0.00648 \cdot f^2 + 0.08486 \cdot f + 0.162.$$

with

$k$ - system amplification,
$t_1$, $t_2$ - time constants of system,
$\alpha_{d2}$ - an auxiliary variable, and
$f = t_1/t_2$ - ratio of system time constants.

**10.** Device according to any one of claims 7 to 9, **characterised in that** the reset time $t_{i1}$ of the I controller (1) is determined at least approximately according to the formula

$$t_{i1} = (0.179 \cdot f + 3.35) \cdot t_{pd}$$

with

$f = t_1/t_2$ - ratio of system time constants $t_1$ and $t_2$ and
$t_{pd}$ - retention time of PD controller (2).

**11.** Device according to claim 4, **characterised in that** in the case of a P controller in the subordinate control loop the amplification $k_p$ of the P controller is determined at least approximately by the formula

$$k_p = \frac{0{,}437f - 0{,}133}{k}$$

with

$f = t_1/t_2$ - ratio of system time constants $t_1$ and $t_2$ and
$k$ - system amplification.

**12.** Device according to claim 11, **characterised in that** the reset time $t_{i2}$ of the I controller is determined at least

approximately by the formulae

$$t_{i2} = \alpha_{ip} t_{pi},$$

$$t_{pi} = \frac{2f}{1+f} t_2$$

$$\alpha_{ip} = -5.10414 \cdot 10^{-6} \cdot f^4 + 0.000487705 \cdot f^3 - 0.0168150 \cdot f^2 + 0.263083 \cdot f + 1.13409$$

with

$\alpha_{ip}$ - an auxiliary variable and
$t_{pi}$ - time constant of the closed subordinate control loop.

**Revendications**

1. Procédé pour l'identification d'un processus à retard avec compensation, notamment d'un système régulé de température, le processus (32) étant muni d'au moins un premier élément de réglage (33), notamment pour le chauffage du processus (32), et d'un deuxième élément de réglage (34), notamment pour le refroidissement du processus, qui agissent sur le processus avec des gains différents et qui se superposent l'un à l'autre quant à leurs actions, **caractérisé par le fait que**
   à partir d'un premier état stationnaire, on met la grandeur réglante (y) du premier élément de réglage (33) à une première valeur constante (80 %) et on arrête la grandeur réglante du deuxième élément de réglage (34),
   après avoir détecté un premier point d'inflexion dans la courbe de la grandeur réglée (x), on identifie un premier modèle IT1 du processus (32),
   on régule le processus en fonction du premier modèle IT1 au moins à proximité d'un deuxième état stationnaire (170 °C) différent du premier état stationnaire,
   à l'aide de la tangente d'inflexion (wh) au premier point d'inflexion et à l'aide des valeurs de la grandeur réglante (y) ainsi que de la grandeur réglée (x) dans le premier et dans le deuxième état stationnaire, on identifie un modèle VZ2 qui décrit la dynamique du processus (32) et le gain pour le premier élément de réglage (33),
   à partir du deuxième état stationnaire, on arrête le premier élément de réglage (33) et on met la grandeur réglante du deuxième élément de réglage (34) à une deuxième valeur constante (20 %),
   après avoir détecté un deuxième point d'inflexion dans la courbe de la grandeur réglée (x), on détermine un gain de processus $k_{ik}$ pour le deuxième élément de réglage (34) suivant la formule

$$k_{ik} = \frac{dx_{wk} / dt + k_{ih} \cdot y_{\infty}}{y_{LLM_TUN}}$$

   avec

   $dx_{wk} / dt$ - une pente de la tangente (wk) au deuxième point d'inflexion,
   $k_{ih}$ - un gain de processus du premier modèle IT1 identifié,
   $y_{\infty}$ - une valeur de la grandeur réglante (y) délivrée dans le deuxième état stationnaire, et
   $Y_{LLM_TUN}$ - une deuxième valeur constante de la grandeur réglante.

2. Procédé selon la revendication 1, **caractérisé par le fait que**
   le premier élément de réglage (33) est un chauffage et le deuxième élément de réglage (34) est un refroidissement, et
   le deuxième état stationnaire (170°C) correspond à un point de fonctionnement typique du processus (32).

3. Dispositif pour la régulation d'un processus à retard avec compensation, notamment d'une extrudeuse de plastique, le processus (32) étant muni d'au moins un premier élément de réglage (33), notamment pour le chauffage du processus (32), et d'un deuxième élément de réglage (34), notamment pour le refroidissement du processus (32), qui agissent sur le processus (32) avec des gains différents et qui se superposent l'un à l'autre quant à leurs actions,

avec un régulateur (30) qui produit une grandeur réglante (y) à partir d'une différence de régulation ($x_d$) formée à partir d'une grandeur de commande (w) et d'une grandeur réglée (x),

**caractérisé par**

une unité de commande (35) telle que

à partir d'un premier état stationnaire, la grandeur réglante (y) du premier élément de réglage (33) est mise à une première valeur constante (80 %) et la grandeur réglante du deuxième élément de réglage (34) est arrêtée,

après avoir détecté un premier point d'inflexion dans la courbe de la grandeur réglée (x), un premier modèle IT1 du processus (32) est identifié,

le processus est régulé en fonction du premier modèle IT1 au moins à proximité d'un deuxième état stationnaire (170 °C) différent du premier état stationnaire,

à l'aide de la tangente d'inflexion (wh) au premier point d'inflexion et à l'aide des valeurs de la grandeur réglante (y) ainsi que de la grandeur réglée (x) dans le premier et dans le deuxième état stationnaire, un modèle VZ2 est identifié, lequel décrit la dynamique du processus (32) et le gain pour le premier élément de réglage (33),

à partir du deuxième état stationnaire, le premier élément de réglage (33) est arrêté et la grandeur réglante du deuxième élément de réglage (34) est mise à une deuxième valeur constante (20 %),

après avoir détecté un deuxième point d'inflexion dans la courbe de la grandeur réglée (x), un gain de processus $k_{ik}$ pour le deuxième élément de réglage (34) est déterminé suivant la formule

$$k_{ik} = \frac{dx_{wk} / dt + k_{ih} \cdot y_{\infty}}{y_{LLM_TUN}}$$

avec

| | |
|---|---|
| $dx_{wk} / dt$ - | une pente de la tangente (wk) au deuxième point d'inflexion, |
| $k_{ih}$ - | un gain de processus du premier modèle IT1 identifié, |
| $y_{\infty}$ - | une valeur de la grandeur réglante (y) délivrée dans le deuxième état stationnaire, et |
| $y_{LLM_TUN}$ - | une deuxième valeur constante de la grandeur réglante. |

**4.** Dispositif selon la revendication 3, **caractérisé par** un régulateur I (1) qui produit une composante intégrale ($y_i$) à partir d'une différence de régulation ($x_d$) formée à partir d'une grandeur de commande (w) et d'une grandeur réglés (x), par un régulateur P ou PD (2) qui, dans un circuit de régulation subordonné, produit une composante proportionnelle ($y_p$) ou une composante proportionnelle et différentielle ($y_{pd}$) à partir de la grandeur réglés (x), et par un élément additionneur (3) pour la superposition des composantes ($y_i$, $y_p$, $y_{pd}$) produites par les régulateurs (1, 2) pour donner une grandeur réglante (y) pour le processus (4).

**5.** Dispositif selon la revendication 4, **caractérisé par le fait que**

une unité split-range (5) est branchée du côté aval de l'élément additionneur (3) de telle sorte que le domaine de valeurs de la grandeur réglante (y) produite par l'élément additionneur (3) est divisé en deux sous-domaines,

pour une valeur de la grandeur réglante (y) dans un premier sous-domaine (0 à 100 %), une grandeur réglante est délivrée pour un chauffage (33) et un refroidissement (34) est arrêté, et

pour une valeur de la grandeur réglante (y) dans un deuxième sous-domaine (- 100 % à 0), une grandeur réglante est délivrée pour le refroidissement (34) et le chauffage (33) est arrêté.

**6.** Dispositif selon la revendication 5, **caractérisé par le fait que**

le domaine de valeurs de la grandeur réglante produite par l'élément additionneur (3) comprend un sous-domaine positif et un sous-domaine négatif,

pour une valeur de la grandeur réglante dans le sous-domaine positif, la grandeur réglante est délivrée sans changement au chauffage (33), et

pour une valeur de la grandeur réglante dans le sous-domaine négatif, la grandeur réglante (y) est délivrée au refroidissement (34) après une pondération avec un facteur (p) qui correspond au rapport entre le gain $k_{ih}$ du chauffage (33) et le gain $k_{ik}$ du refroidissement (34).

**7.** Dispositif selon l'une des revendications 4 à 6, **caractérisé par le fait que**, dans le cas d'un régulateur PD (2) dans le circuit de régulation subordonné, le gain $k_{pd}$ et la constante de temps $t_{pd}$ sont calculés par un développement de régulateur selon les méthodes mathématiques de l'optimisation dans l'espace d'états.

**8.** Dispositif selon la revendication 7, **caractérisé par le fait que**, pour l'optimisation dans l'espace d'états. un critère

de qualité

$$J = \int_0^\infty (\underline{x}'Q\underline{x} + yry)dt$$

avec

| | |
|---|---|
| $\underline{x}' = (x, x^{\bullet})$ - | un vecteur d'état transposé, |
| $\underline{x}$ - | un vecteur d'état, |
| Q - | une matrice unité, |
| y - | une grandeur réglante, et |
| r - | un facteur de pondération entre 0,0002 et 0,02 |

est minimisé.

**9.** Dispositif selon l'une des revendications 4 à 6, **caractérisé par le fait que**,
dans le cas d'un régulateur PD (2) dans le circuit de régulation subordonné, le gain $k_{pd}$ et la constante de temps $t_{pd}$ du régulateur (2) sont déterminés au moins approximativement suivant les formules

$$k_{pd} = \frac{21,4}{k},$$

$$t_{pd} = \alpha_{d2} \cdot t_2$$

et

$$\alpha_{d2} = 4,89 \cdot 10^{-8} \cdot f^5 - 5,9290 \cdot 10^{-6} \cdot f^4 +$$

$$2,7814 \cdot 10^{-4} \cdot f^3 - 0,00648 \cdot f^2 + 0,08486 \cdot f + 0,162$$

avec

| | |
|---|---|
| k - | un gain du système, |
| $t_1$, $t_2$ - | des constantes de temps du système, |
| $\alpha_{d2}$ - | une grandeur auxiliaire, et |
| $f = t_1 / t_2$ - | un rapport des constantes de temps du système. |

**10.** Dispositif selon l'une des revendications 7 à 9, **caractérisé par le fait que** le temps de compensation $t_{i1}$ du régulateur I (1) est déterminé au moins approximativement suivant la formule

$$t_{i1} = (0,179 \cdot f + 3,35) \cdot t_{pd}$$

avec

| | |
|---|---|
| $f = t_1 / t_2$ - | un rapport des constantes de temps $t_1$ et $t_2$ du système, et |
| $t_{pd}$ - | une constante de temps du régulateur PD (2). |

**11.** Dispositif selon la revendication 4, **caractérisé par le fait que**,
dans le cas d'un régulateur P dans le circuit de régulation subordonné, le gain $k_p$ du régulateur P est déterminé au moins approximativement suivant la formule

$$k_p = \frac{0,437f - 0,133}{k}$$

avec

$f = t_1 / t_2$ - un rapport des constantes de temps $t_1$ et $t_2$ du système, et
k - un gain du système.

**12.** Dispositif selon la revendication 11, **caractérisé par le fait que** le temps de compensation $t_{i2}$ du régulateur I est déterminé au moins approximativement suivant les formules

$$t_{i2} = \alpha_{ip} t_{pi},$$

$$t_{pi} = \frac{2f}{1+f} t_2$$

$$\alpha_{ip} = -5{,}10414 \cdot 10^{-6} \cdot f^4 + 0{,}000487705 \cdot f^3 - 0{,}0168150 \cdot f^2 + 0{,}263083 \cdot f + 1{,}13409$$

avec

$\alpha_{ip}$ - une grandeur auxiliaire, et
$t_{pi}$ - une constante de temps du circuit de régulation subordonné fermé.

FIG 1

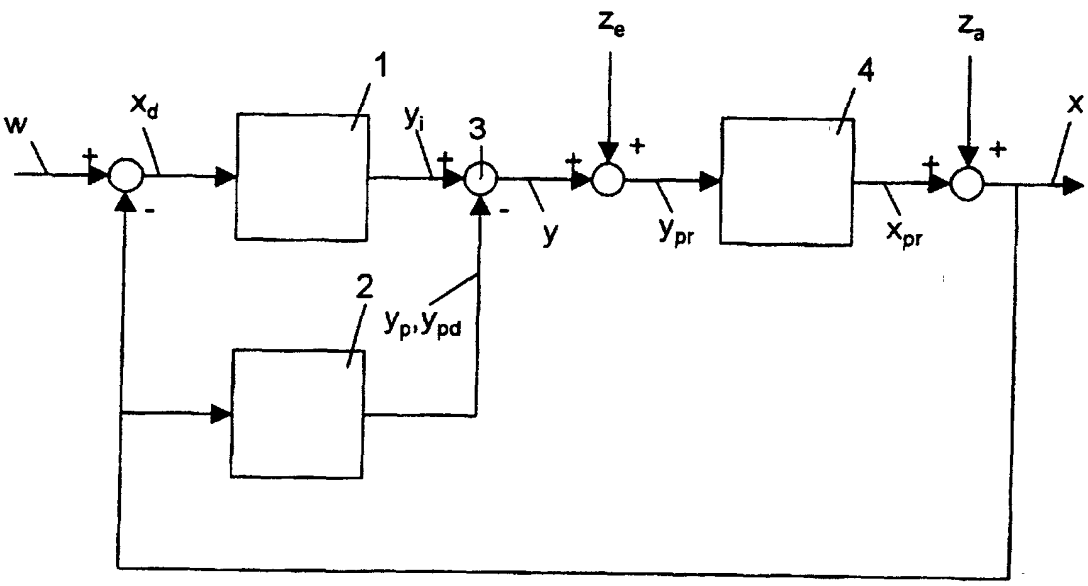
w
+
-
$x_d$
1
$y_i$
3
+
-
$y$
2
$y_p, y_{pd}$
$z_e$
+
+
$y_{pr}$
4
$z_a$
+
+
$x_{pr}$
x

FIG 2

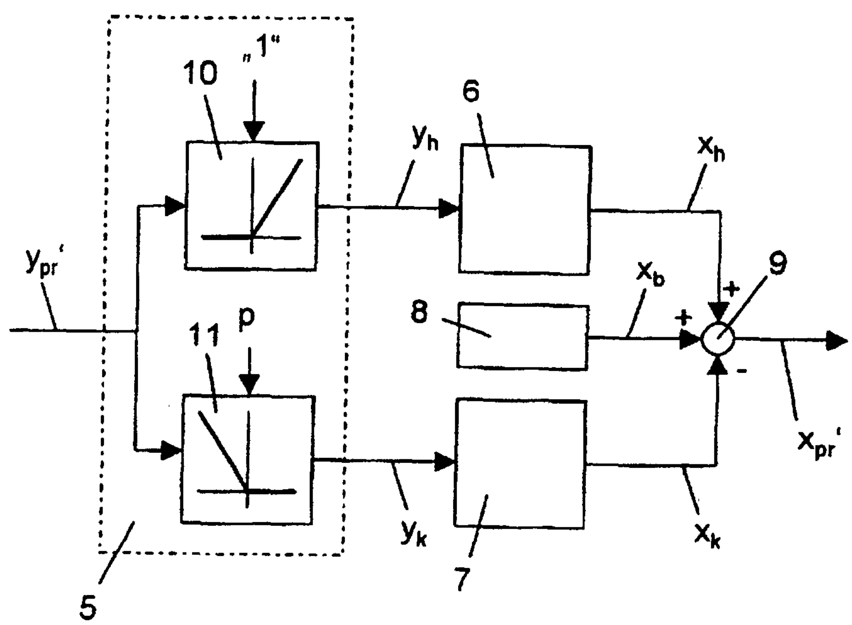
$y_{pr}'$
10
„1"
11
p
5
$y_h$
$y_k$
6
8
7
$x_h$
$x_b$
$x_k$
9
+
+
-
$x_{pr}'$

FIG 3

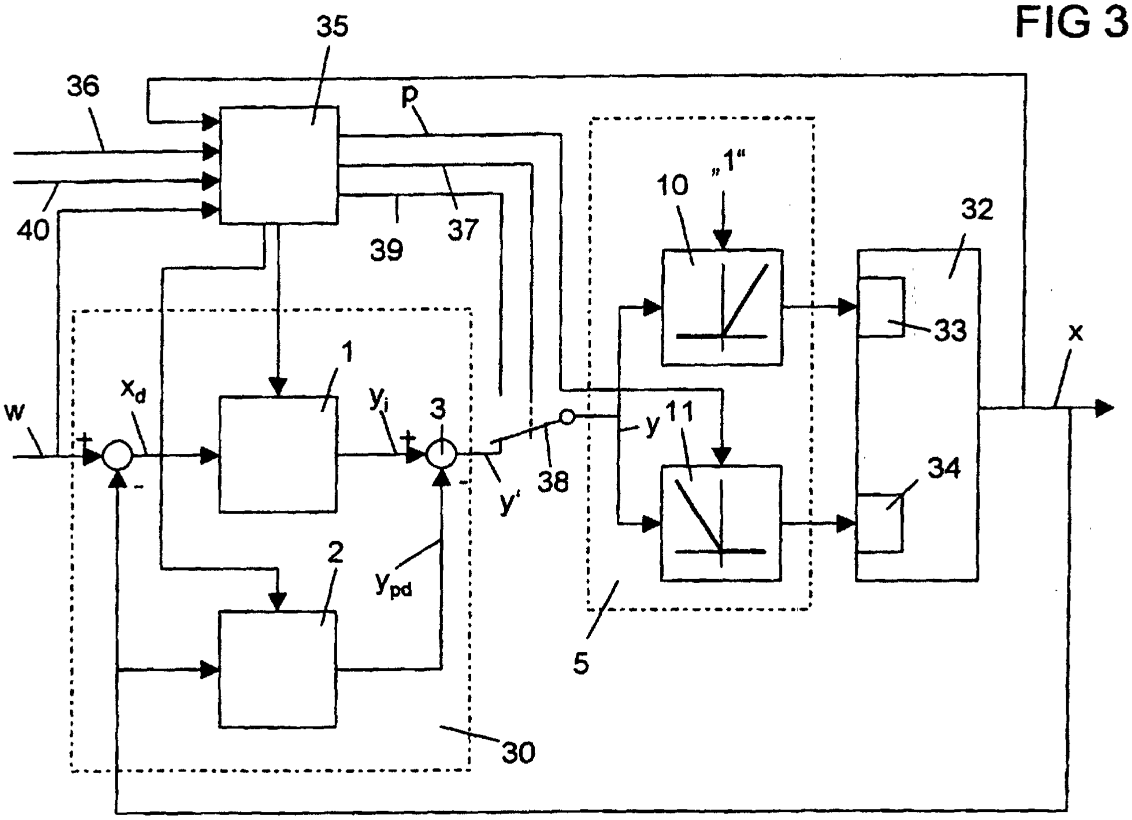

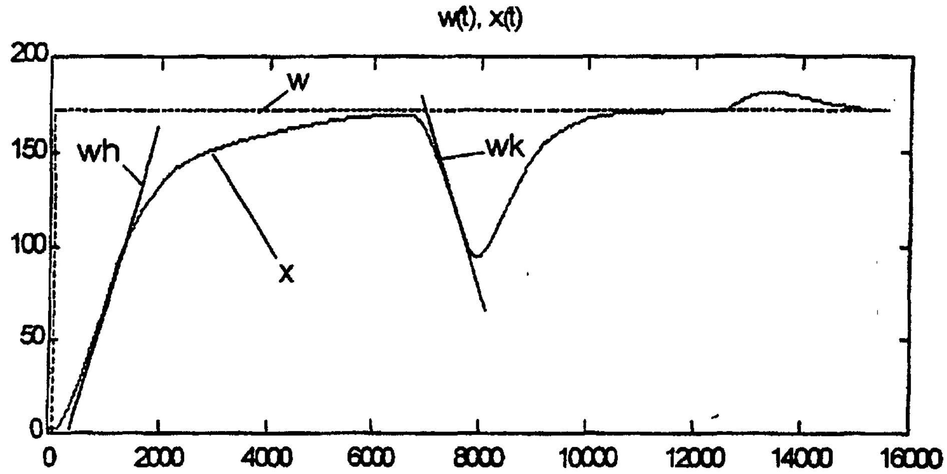
w(t), x(t)
200
150
100
50
0
0
2000
4000
6000
8000
10000
12000
14000
16000
w
wh
x
wk

FIG 4

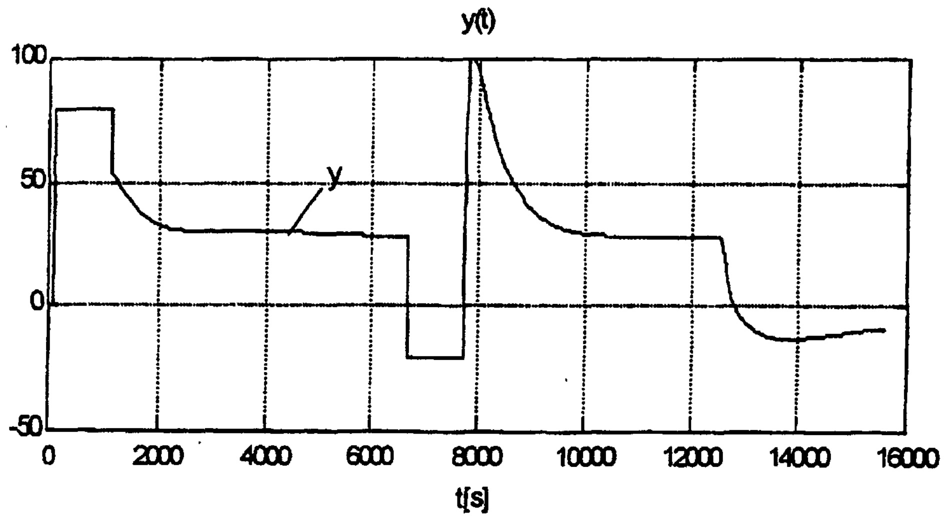
y(t)
100
50
0
-50
0
2000
4000
6000
8000
10000
12000
14000
16000
t[s]
y

FIG 5

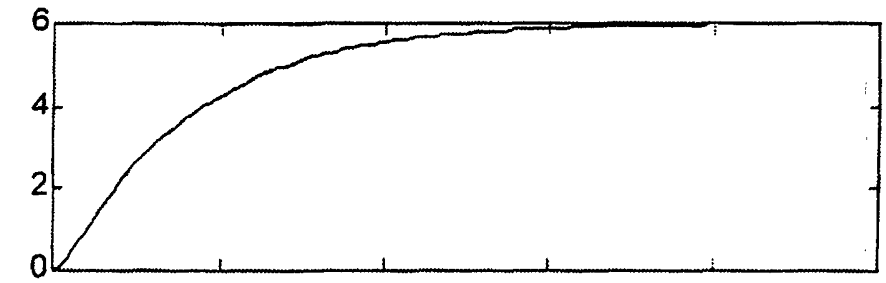


FIG 6

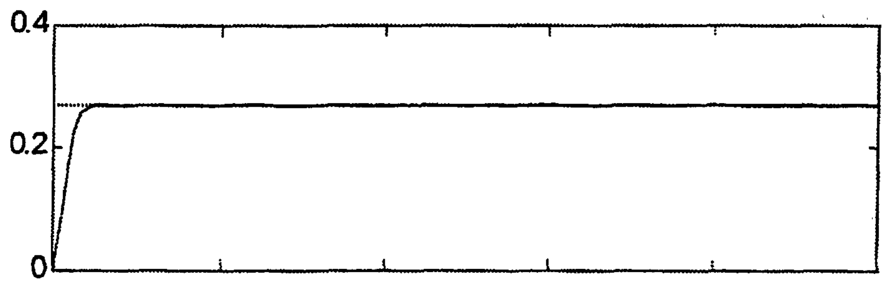


FIG 7

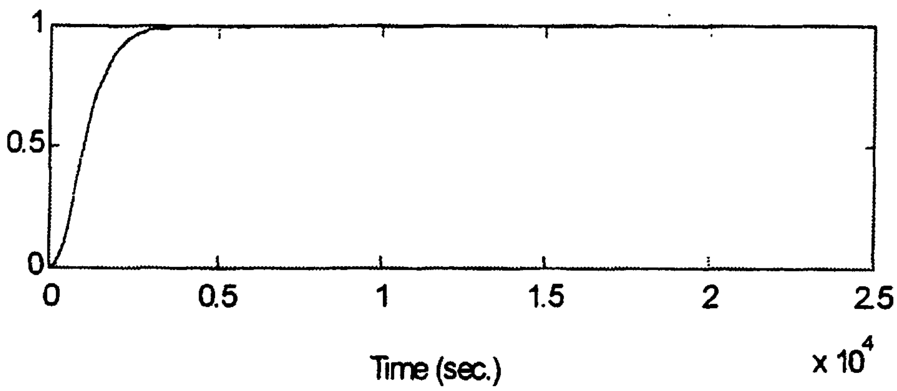


FIG 8

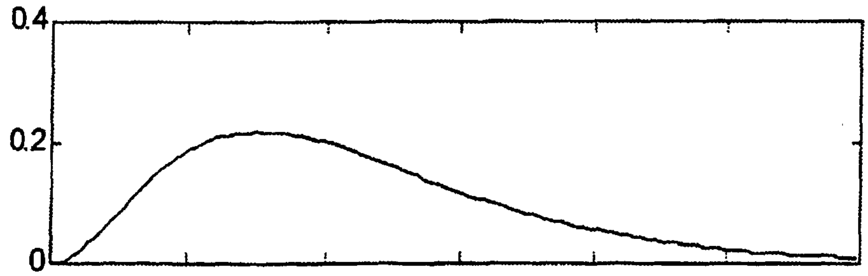


FIG 9

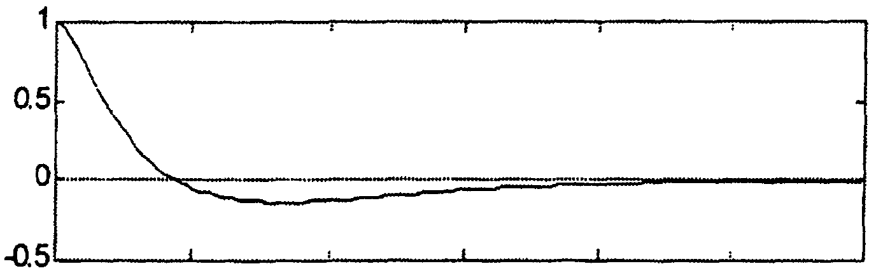


FIG 10

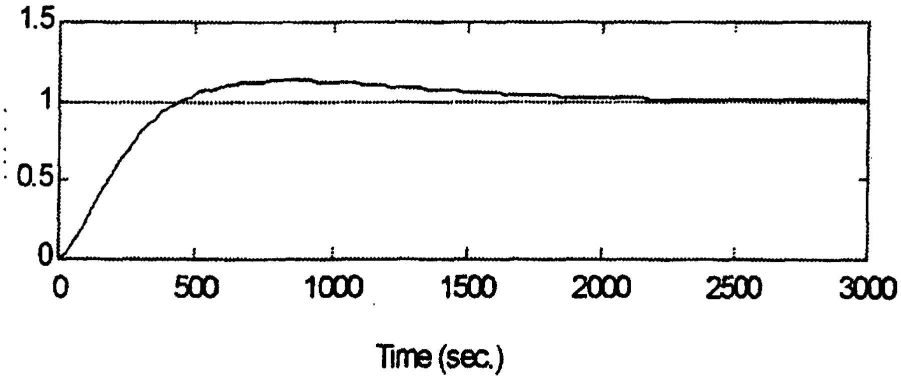


FIG 11

FIG 12

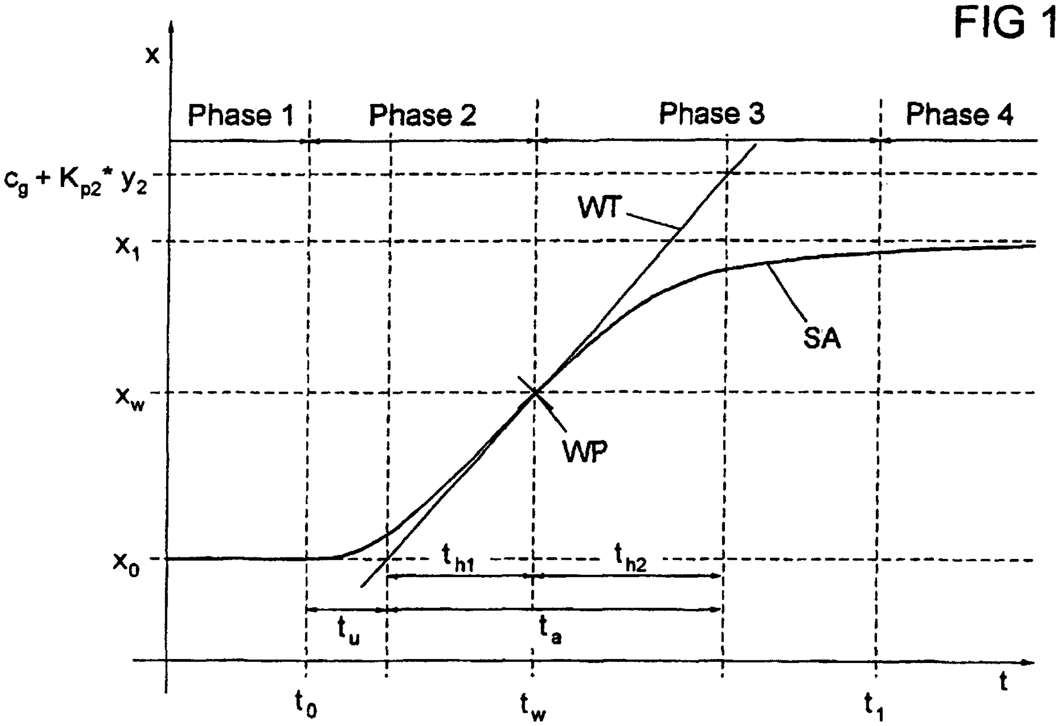
x
Phase 1
Phase 2
Phase 3
Phase 4
$c_g + K_{p2} * y_2$
$x_1$
$x_w$
$x_0$
WT
SA
WP
$t_{h1}$
$t_{h2}$
$t_u$
$t_a$
$t_0$
$t_w$
$t_1$
t